# EUROPEAN PATENT APPLICATION

(11) **EP 2 088 749 A1**
(43) Date of publication of application: **12.08.2009**
(21) Application number: 08002389.8
(22) Date of filing: 08.02.2008
(51) Int. Cl.: H04L 29/08

(54) **Ubiquitous gateway and/or global query manager for querying an object in a mobile communication network**

(71) Applicant: NTT DoCoMo, Inc., Chiyoda-ku Tokyo 100-6150 (JP)
(72) Inventor: Ochi, Daisuke, 80469 München (DE); Kellerer, Wolfgang, 82256 Fuerstenfeldbruck (DE); Widmer, Joerg, 81539 München (DE); Berndt, Hendrik, 85399 Halbergmoos (DE)
(74) Representative: Stöckeler, Ferdinand

(57) **Abstract**

A Ubiquitous Gateway 100 for communicating in a mobile communication network, the mobile communication network comprising a plurality of Ubiquitous Gateways. The Ubiquitous Gateway comprises a first means 110 for communicating with the mobile communication network and a second means 120 for communicating with other Ubiquitous Gateways and for communicating with an object, an object having an object identification, wherein the second means (120) for communicating is adapted for detecting an object record received from a Ubiquitous Gateway or an object. The Ubiquitous Gateway 100 comprises an object cache 130 for temporarily storing an object record comprising an object record identification, an object identification and an object location. Furthermore, the Ubiquitous Gateway 100 comprises a controller 140 being adapted for repetitively monitoring objects through the second means 120 for communicating, for storing object records of monitored objects in the object cache 130 and adapted for repetitively exchanging an object record from the object cache 130 with other Ubiquitous Gateways. Moreover, the controller 140 is adapted for receiving an object query on a query object from a query origin and for reporting an object record on the query object from the object cache 130 to the query origin if available.

## Description

The present invention is in the field of finding or tracking of objects in communication networks, as it increasingly becomes an issue along with the growing acceptance of electronical identification.

Conventionally, it is difficult to track or search real world objects, as these objects are not connected to a global network, such as the Internet or a telecommunications network. Current object tracking or object searching solutions, for example using RFID (RFID = Radio Frequency Identification) to tag objects, only work in specific limited domains, such as supermarkets, CD stores (CD = Compact Disc) or other distribution management domains. However, there is no tracking or searching solution in larger areas, such as the unit of city or a solution that is not bound to a certain specific class of objects.

Recently, mobile phones equipped with Near Field Communication (NFC = Near Field Communication), which shall in the following also be referred to as Ubiquitous Gateways (UG = Ubiquitous Gateway), have become widely used. As mobile phones already come with a global infrastructure, i.e. the cellular network, they can be used to search or track tagged objects, without deploying dedicated sensors around a larger area.

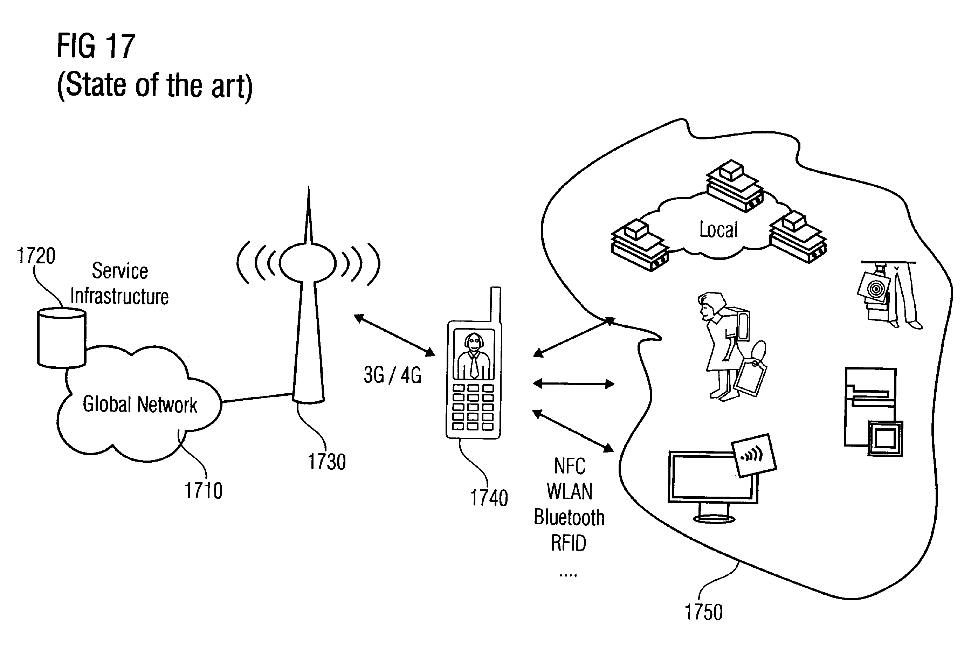

Fig. 17 illustrates a conventional scenario, wherein a global network 1710, for example a mobile communication network is depicted on the left-hand side. The global network 1710 offers a service infrastructure 1720 and utilizes for example base stations 1730 to communicate using wireless communications with a mobile device 1740. The wireless communication may be carried out on the basis of third or fourth generation mobile communication systems, such as for example GSM (GSM = Global System for Mobile Communication), UMTS (UMTS = Universal Mobile Telecommunication System), LTE (LTE = Long Term Evolution), etc.

The mobile device 1740 may be considered as a Ubiquitous Gateway, as it may also operate several additional interfaces using for example wireless communications standards as WLAN (WLAN = Wireless Local Area Network), Bluetooth, RFID (RFID = Radio Frequency Identification), ISM (ISM = Industrial, Scientific and Medical radio frequencies), other type of NFC (NFC = Near Field Communication), etc.

As indicated in Fig. 17, the mobile device 1740 may use said communication technologies to communicate with real world objects 1750 among them, for example, local networks, tagged objects as RFID-tagged bags, electronic equipment, etc. The spectrum of real world objects is not limited in any way, as RFID tags, for example, can be used with any object, e.g., even for people as indicated by the sketch on the right-hand side of Fig. 17, even school children may be tagged. The mobile device may further be equipped with sensors for monitoring physical measures, means for personal area networks (PAN = Personal Area Network), means to monitor tagged objects/persons, Bluetooth beacons, etc. In addition, the global network 1710 may refer to a global information network as for example an IP-based cellular network (IP = Internet Protocol), the World Wide Web, Internet, etc.

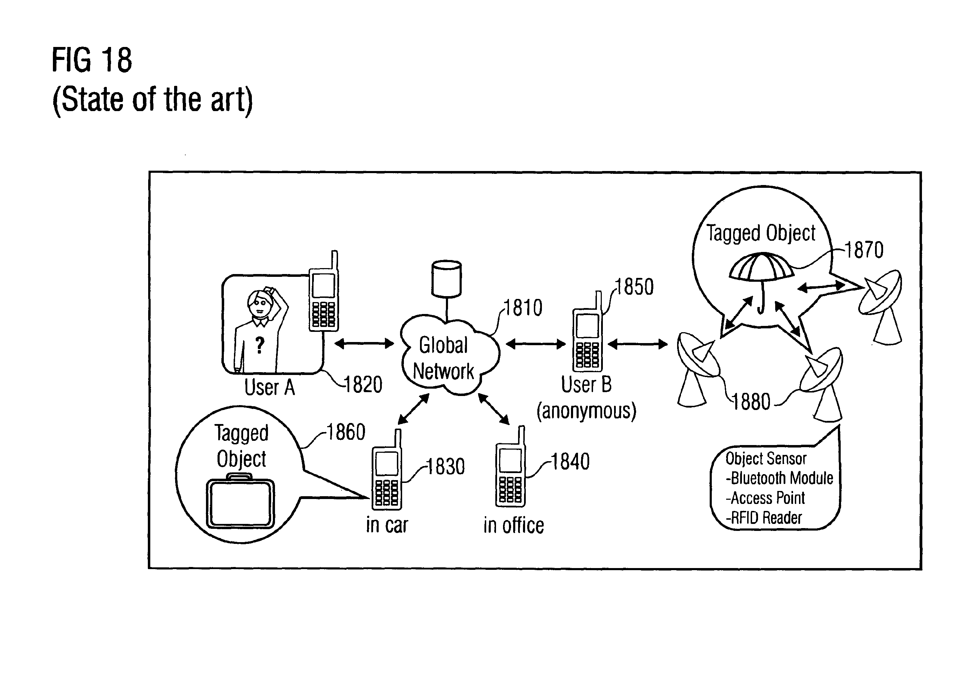

Fig. 18 illustrates another scenario describing a conventional system. Fig. 18 shows a global network 1810, to which a number of mobile devices are connected. Among them for example, user A 1820, a car 1830, an office 1840, and a user B 1850.

Additionally, Fig. 18 shows a tagged object 1860 which may be able to communicate with the mobile device 1830 and another tagged object 1870, which may communicate through another network 1880 with user B 1850. The other network 1880 may be a PAN, comprising access points, RFID readers, object sensors, Bluetooth modules, etc.

The scenario depicted in Fig. 18 illustrates how a mobile communication may be helpful in finding misplaced, lost, or stolen items via a mobile network, the global network 1810, respectively. For example, lost items may be detected or corporate equipment may be found, for example on a campus, among coworkers, officials, training personal, etc. Furthermore, personal items may be searched at home, in a car, at work remotely, or items lost anywhere.

However, such a search based on mobile phones or devices may not work with a "simple query"-solution which sends queries to all UGs in a larger area, as for example a city, in order to search for an object, as this would lead to a high network load and possible overload conditions in the network. On the other hand, it may also not work with a "simple update"-solution in that every mobile phone observes all objects around it, and sends any change of such object status to a central server periodically, as this would again lead to a high network load and possible overload, as well as a high battery consumption of the mobile phone. Conventional solutions, as for example the "simple query"-solution and the "simple update"-solution have the disadvantage that they cause high network load conditions and potential network instability, and come along with high battery consumptions at the mobile devices.

Various research papers argue for the relevance of locating real word objects, monitoring the presence of items, or avoiding their loss. Examples can be found in Gaetano Borriello, Waylon Brunette, Matthew Hall, Carl Hartung, and Cameron Tangney; Reminding about tagged objects using passive RFIDs; In Proceedings of the 6th International Conference on Ubiquitous Computing (UbiComp'04), Nottingham, England, September 2004;
Christian Decker, Uwe Kubach, and Michael Beigl; Revealing the retail black box by interaction sensing; In 3rd International Workshop on Smart Appliances and Wearable Computing (SAWC'03) at ICDCS'03, Providence, RI, USA, May 2003;
Hirobumi Shimizu, Osamu Hanzawa, Kenichiro Kanehana, Hiroki Saito, Niwat Thepvilojanapong, Kaoru Sezaki, and Yoshito Tobe; Association management between everyday objects and personal devices for passengers in urban areas; Demonstration Abstract in Adjunct Proceedings of Pervasive'05, Munich, Germany, May 2005;
Roy Want, Kenneth P. Fishkin, Anuj Gujar, and Beverly L. Harrison; Bridging Physical and Virtual Worlds with Electronic Tags; In Proceedings of the ACM SIGCHI Conference on Human Factors in Computing Systems (CHI'99), pages 370-377, Pittsburgh, PA, USA, May 1999;
Kok Kiong Yap, Vikram Srinivasan, and Mehul Motani. MAX: Human-centric search of the physical world; In Proceedings of the 3rd International Conference on Embedded Networked Sensor Systems (SENSYS'05), San Diego, CA, USA, November 2005.

Many such systems, however, suggest a specific pre-installed object sensing infrastructure, which is costly to deploy and to maintain. Reminder systems focus on notifying users before a loss takes place. Generally, it can be assumed that tagged objects will often be intentionally left behind and therefore immediate notification may not always be desirable.

An object search system could also be implemented by proactively sending all sensor readings to a centralized database, which can be queried at a later stage when an object needs to be located. As already mentioned above, this solution can be referred to as the "simple update"-solution. Such a system would phase the formidable scalability challenge of a global data collection system, such as IrisNet, cf. Phillip B. Gibbons, Brad Karp, Yan Ke, Suman Nath, and Srinivasan Seshan; IrisNet: An architecture for a worldwide sensor web; IEEE Pervasive Computing, 2(4), 2003; or Hourglass, cf. Peter Pietzuch, Jonathan Ledlie, Jeffrey Shneidman, Mema Roussopoulos, Matt Welsh, and Margo Seltzer; Network-aware operator placement for stream-processing systems; In Proceedings of the 22nd International Conference on Data Engineering (ICDE'06), Atlanta, GA, USA, April 2006.

Some research and distributed sensing systems also advocate the use of mobile phones and mobile communication networks infrastructure, cf. J. Burke, D. Estrin, M. Hansen, A. Parker, N. Ramanathan, S. Reddy, and M. B. Srivastava; Participatory sensing; In SENSYS'06Workshop onWorld-Sensor-Web: Mobile Device Centric Sensor Networks and Applications (WSW'06), Boulder, CO, USA, November 2006;
Shane B. Eisenman, Gahng-Seop Ahn, Nicholas D. Lane, Emiliano Miluzzo, Ronald A. Peterson, and Andrew T. Campbell; MetroSense project: People-centric sensing at scale. In SENSYS'06 Workshop on World-Sensor-Web: Mobile Device Centric Sensor Networks and Applications (WSW'06), Boulder, CO, USA, November 2006; or SensorPlanet, www.sensorplanet.org, 2007.

All the abovementioned conventional solutions however provide the disadvantage that none of them targets applications where objects are searched, rather than collecting arbitrary sensor information from various user carried devices. In another project a scoping mechanism based solution was provided, cf. C. Frank, P. Bolliger, F. Mattern and W. Kellerer; The Sensor Internet at Work: Locating Everyday Items Using Mobile Phones; Submitted to Elsevier Mobile and Pervasive Computing Journal, 2007.

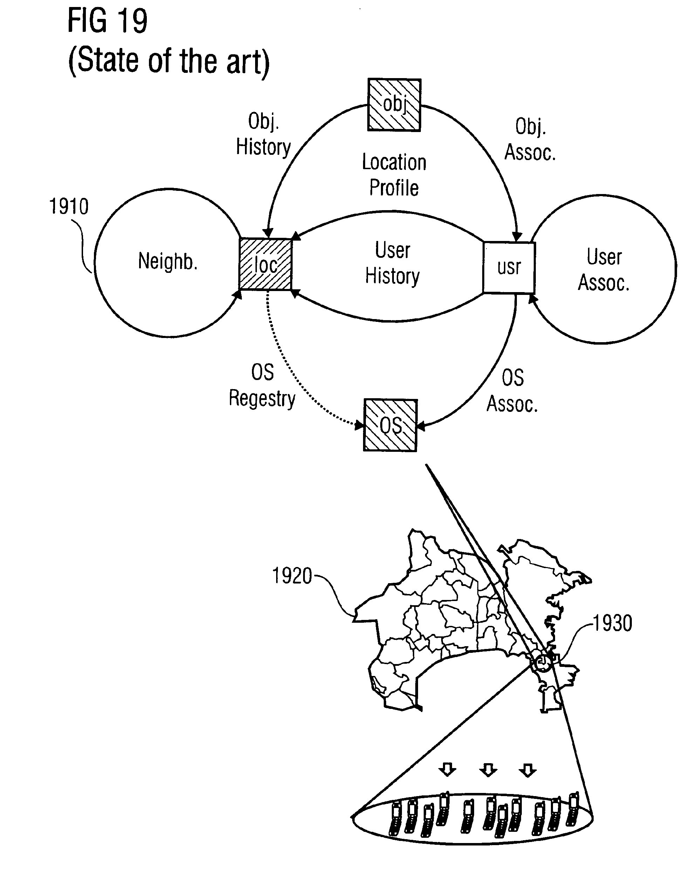

The motivation for said solution was to search real world objects using Ubiquitous Gateways as a mediator between a global network and a local sensor network. The mechanism narrows the search focus from a larger global domain, as for example world-wide, to a local domain as for example a few cells of a cellular system, by exploiting information about the user. This is also illustrated in Fig. 19. The flowchart 1910 at the top of Fig. 19 shows how information about a user is gathered, for example including the user's moving history, his favorite places, family and friend's information, and the context when the object was last seen. Base on such information, a local domain can be selected, which is also referred to as scope. This is indicated by the map 1920 in Fig. 19 of which a local section 1930 is selected, in which a search query is sent to the UGs in the local domain.

The algorithm therefore has the disadvantage that it is based on an information source in a network, as for example the last seen position. Even if available, this can be a very coarse grained information, for example referring to a number of cells within a local domain. The proposed algorithm can therefore be useful for a global domain scoping by last seen information, user moving history, human relation and so on for a global domain. However, random query installation is utilized for a scoped local domain yielding the above described disadvantages.

Another conventional concept called the Last Encounter Routing (LER = Last Encountered Routing) has been developed for IP-routing in ad hoc networks based on last seen information, cf. M. Grossglauser, M. Vetterli; Locating Nodes with EASE: last Encounter Routing in Ad Hoc Networks through Mobility Diffusion; In Proceedings IEEE INFOCOM 2003.

The last seen information is also referred to as the last encounter. Its principles can also be applied for locating real world objects instead of IP addresses of ad hoc nodes. In the LER algorithm, each node periodically observes other nodes in its vicinity by NFC and stores the last encounter position and time where and when the node met other nodes as last encounter history. When a node N_{S} wants to send a packet to a node N_{D}, N_{S} acts as a first anchor point and asks the last encounter history of N_{D} to other nodes in its vicinity by recursive flooding. After finding a last encounter history, N_{S} sends a packet to one node at the last encounter position using position-based multi-hop routing and sets this node as the new anchor point. The new anchor point then performs the same process as performed by N_{S}. Eventually, the packet is delivered to N_{D}.

The zone routing protocol for ad hoc networks (ZRP = Zone Routing Protocol), cf. Z.J. Haas and M.R. Pearlman, The Performance of Query Control Schemes for the Zone Routing Protocol, IEEE/ACM Trans. Networking, 9, 2001; provides another approach to improve the search for information in ad hoc networks. It is applied to peer-to-peer applications in ad hoc networks, cf. W. Kellerer, R. Schollmeier; Proactive Search Routing for Mobile Peer-to-Peer Networks: Zone-based P2P; In Proceedings IEEE ASWN 2005, Paris, France, June 2005.

It is the object of the present invention to provide a concept for an improved search of objects.

The objective is achieved by a Ubiquitous Gateway according to claim 1, a method for communicating in a mobile communication network according to claim 25, a global query network according to claim 27, a method for managing a query according to claim 42 and a system for searching an object according to claim 44.

It is the finding of the present invention that distributed object information in a mobile communications network, as mobile phones, can for example allow for the mediation between virtual information in a global network, as for example a cellular network, and real world information in a local network, as for example a ubiquitous network around a mobile phone. Such ubiquitous networks may for example comprise sensor networks. Mobile devices, in the following also referred to as Ubiquitous Gateways (UG) have global connectivity and near field connectivity (NFC). A service provider can therewith leverage the UG functionality and save costs of deploying a separate sensor infrastructure, which is especially expensive for large area coverage of services spanning whole countries.

Leveraging this UG functionality, search for real world information such as the location of real world objects can be supported based on gathering and storing real world information through mobile phones.

It is further a finding of the present invention that a query of real world data can be improved, if it is based on local caching of real world information in a mobile phone and on proactive sharing of the cached information among physically close phones. Embodiments may use the shared information to determine a trace of a searched object, without having to rely on the central storage in the global network, and route closer to the queried object until the object is found. Routing can be done by a multi-hop among mobile phones using NFC technologies or the global network.

Embodiments can thereby help finding real world objects, persons, lost objects, real world service discovery, i.e. services provided by mobile objects, cellular network assisted IP routing in mesh/ad hoc networks and locally sharing information among mobile phones. Embodiments can provide the advantage that a search for real world information may be established without additional infrastructure setup, and optimized searches saving network bandwidth and energy consumption on mobile phones may be carried out. Embodiments may thereby enable new business solutions.

Embodiments can provide the advantage that network traffic, including the number of queries and information updates can be reduced, since additional information can be shared locally among mobile devices. Embodiments may enable leveraging or a balancing between local and global networking. Embodiments may also enable different solutions depending on the application requirements determining whether local information exchange, information caching or global network use is more advantageous.

Embodiments may use a reactive, i.e. a query based approach, especially in a mobile communication network, whereby the number of sensor readings, as for example object X seen by the object sensor A, can be expected to be much larger than the number of queries. In embodiments, the reactive approach may be augmented with a local proactive information update among physically close mobile devices, which in some embodiments do not intend to update all sensing information to a central database. Embodiments may enable applications where objects are searched, rather than collecting arbitrary sensor information from various user carried devices. Furthermore, devices may take advantage of the cellular infrastructure for improved search routing.

Embodiments may also take advantage of conventional algorithms, as for example the scoping algorithm as was described above. For example, embodiments may enable the narrowing down of a coarse scope, such as in terms of a few cells of a mobile communication network, within a local domain. Embodiments may allow for the installation of queries on UGs around a last seen position randomly, considering information stored on the queried mobile phones, in order to improve the search query. Embodiments may provide the advantage that conventional solutions may be improved in terms of a faster converge of a query.

Embodiments may provide the advantage that they save battery consumption in mobile devices as the nodes in the vicinity of a mobile device may be observed through NFC, and information may not be exchanged among other nodes. Position based multi-hop routing paths may be replaced by global networks, i.e. cellular paths to reduce the overhead and speed up search in embodiments. Several queries may be installed in parallel around a target anchor point location to avoid search unable periods while an anchor point is changing in embodiments of the present invention. Moreover, embodiments may enable the replication of information stored on one node to its close neighbors. Embodiments may exploit the principle of sharing data on available information, i.e. objects, locally in order to improve the search for said objects.

The present invention is therefore based on the finding that advantages result in leveraging the aforementioned UG functionality of mobile phones. Embodiments may support searching for real world information such as the location of real world objects. This is based on the gathering and storing of real world information through mobile phones. In embodiments, mobile phones may locally cache real world information and share said cached information proactively among physically close mobile phones. The shared information can then be used to determine a trace of a searched object without relying on a central storage in the global network, routing can be done multi-hop among mobile phones through NFC technology or using the global network.

In embodiments, the information sensed by and cached in a mobile phone may be stored in an object cache and a UG cache. The first may contain information about observed objects with their location and time. The latter may contain information on observed mobile phones (UGs) with their location and time. Both caches may be periodically exchanged among nearby mobile phones e.g. using NFC. In embodiments, a search may be performed based on multi-hop communication using NFC. When a UG_{S} wants to search an object O_{D}, UG_{S} may check its own object cache. If there is a record of O_{D} in the object cache, UG_{S} may obtain the last seen position and time, and then select the nearest UG₂ at the position from the UG cache, and then UG_{S} may send an object searching query to UG₂ with an according record information via NFC, or if the location is far away, via the cellular network as the UG address, for example, its phone number is known from the UG cache. Then UG₂ may check its own object cache and UG cache, and if there is a newer record regarding O_{D}, UG₂ may select a new UG₃ and send the query to UG₃. In this manner, embodiments may trace UGs which have newer records at their disposal, and finally O_{D} will be found.

In another embodiment, a search may be performed using the global network, for example a cellular network. Embodiments may use a global query manager (GQM = Global Query Manager) as a central server in order to improve the search with a reduced network load. In such embodiments, only the object cache may be used. For a location of a UG, embodiments may rely on the registered position of mobile phones in the mobile communication system, for example on cell granularits. When the GQM receives the search query for an object O_{D}, it may choose a UG and retrieves its object cache to get a record regarding O_{D}, if available. Basically, a UG can be chosen randomly in embodiments, for example if the GQM has some information of a user's behavior pattern, previous search result, and so on, in advance, the GQM may filter all possible UGs according to the highest likelihood of places where objects could be found. If the UG does not have a record on O_{D}, the GQM may choose another UG. Once a record is hit, the GQM may get the last seen position from the record, and then select some UGs around said position.

In embodiments, the GQM may obtain newer records from the selected UGs. If newer records are found, the GQM may select some UGs around the newer position, and so recursively find the newest position available. Finally, if there is no newer record found, the GQM may assume that the newest record indicates the current position of the search object O_{D}, it may then install an object searching query to some UGs around the last seen position.

Embodiments may also be used in combination with a system utilizing for example the scoping mechanism introduced by C. Frank, P. Bolliger, F. Mattern and W. Kellerer, wherein embodiments may also be useful for a larger scale or global domain.

Embodiments thereby provide the advantage that they allow searching of real world objects without the need of installing any infrastructure for object sensing, as mobile phones are leveraged to act as object sensors mediating between local networks and global networks for example, cellular networks.

Based on information about objects cached on mobile phones, embodiments may allow finding of objects faster with less networking overhead than other conventional solutions, as for example "simple query" or "simple update".

Embodiments of the present invention thereby provide the advantage of improved search latency through proactively shared cache information. Another advantage of embodiments is the operability in a fully distributed operation mode, as no global server needs to be involved, embodiments are thereby easy to deploy. Moreover, embodiments can use the global network in order to further reduce the search latency.

Furthermore, embodiments provide the advantage that search queries can be carried out utilizing a lower network load than conventional approaches. Embodiments can be used for moving objects, as they can be tracked. Embodiments are easy to be deployed as they may not necessarily rely on an involvement of the global network system. Embodiments can enable a lower search latency for a number of frequently searched objects. Moreover, embodiments can enable more cost effective queries in terms of battery consumption, as they may only rely on NFC communication. Embodiments may also be used for use cases which include searches for real world information, such as persons, services provided by mobile devices, or identifiers, e.g., IP addresses in mobile ad hoc networks, which in the following all will be considered objects.

In the following, embodiments will be described in detail using the accompanying figures, in which:
Fig. 1a shows an embodiment of a Ubiquitous Gateway;
Fig. 1b shows another embodiment of a Ubiquitous Gateway;
Fig. 1c shows an embodiment of a Global Query Manager;
Fig. 2a shows an embodiment of an object cache;
Fig. 2b shows an embodiment of a UG cache;
Fig. 3a shows a flowchart of an embodiment of a UG;
Fig. 3b shows a flowchart of an embodiment of an object search query processing at a UG;
Fig. 4a shows a scenario illustrating information sharing of an embodiment;
Fig. 4b shows an illustration of information caching at an embodiment of a UG;
Fig. 4c shows another scenario illustrating information sharing of an embodiment;
Fig. 4d illustrates a principle search query using an embodiment;
Fig. 5a illustrates a flowchart of an embodiment of a Global Query Manager;
Fig. 5b illustrates a flowchart of an embodiment of an object search query process at a GQM;
Fig. 6a illustrates a flowchart of an embodiment of a main loop at a UG;
Fig. 6b illustrates a flowchart of an embodiment of an object search query process at a UG;
Fig. 7a illustrates a scenario of an embodiment utilizing a GQM based query;
Fig. 7b illustrates another scenario of a an embodiment utilizing a GQM based query;
Fig. 8 illustrates an alternative scenario of an embodiment utilizing a GQM based query;
Fig. 9 shows simulation results of a mean query success time with varying UG density;
Fig. 10 shows simulation results on the global network usage time per query;
Fig. 11 shows simulation results on the NFC usage per query;
Fig. 12 shows simulation results on the total NFC usage per hour;
Fig. 13 shows simulation results on the mean query success time with varying object density;
Fig. 14 shows simulation results on a mean query success time with varying object cache size at the UG;
Fig. 15 shows simulation results on the mean query success time with varying object movable rate;
Fig. 16 shows simulation results on the network cost;
Fig. 17 shows a state of the art scenario;
Fig. 18 shows a state of the art block diagram of a mobile communication network; and
Fig. 19 shows a state of the art scoping algorithm.

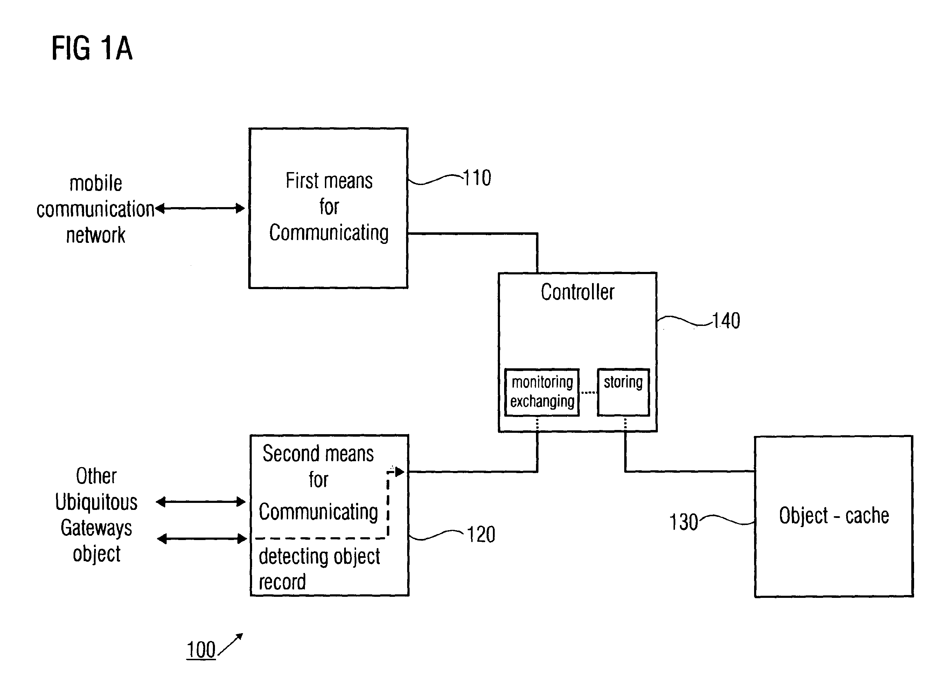

Fig. 1a shows an embodiment of a Ubiquitous Gateway 100 for communicating in a mobile communication network, the mobile communication network comprising a plurality of Ubiquitous Gateways. The Ubiquitous Gateway 100 comprises a first means 110 for communicating with the mobile communication network and a second means 120 for communicating with other Ubiquitous Gateways and for communicating with an object, the object having an object identification, wherein the second means 120 for communicating is adapted for detecting an object record received from a Ubiquitous Gateway or an object. Moreover, the Ubiquitous Gateway 100 comprises an object cache 130 for temporarily storing an object record comprising an object record identification, an object identification and an object location. The Ubiquitous Gateway 100 further comprises a controller 140 being adapted for repetitively monitoring objects through the second means 120 for communicating, for storing object records of monitored objects in the object cache 130, and for repetitively exchanging an object record from the object cache 130 with other Ubiquitous Gateways. The controller 140 is further adapted for receiving an object query on a query object from a query origin and for reporting an object record on the query object from the object cache 130 to the query origin, if available.

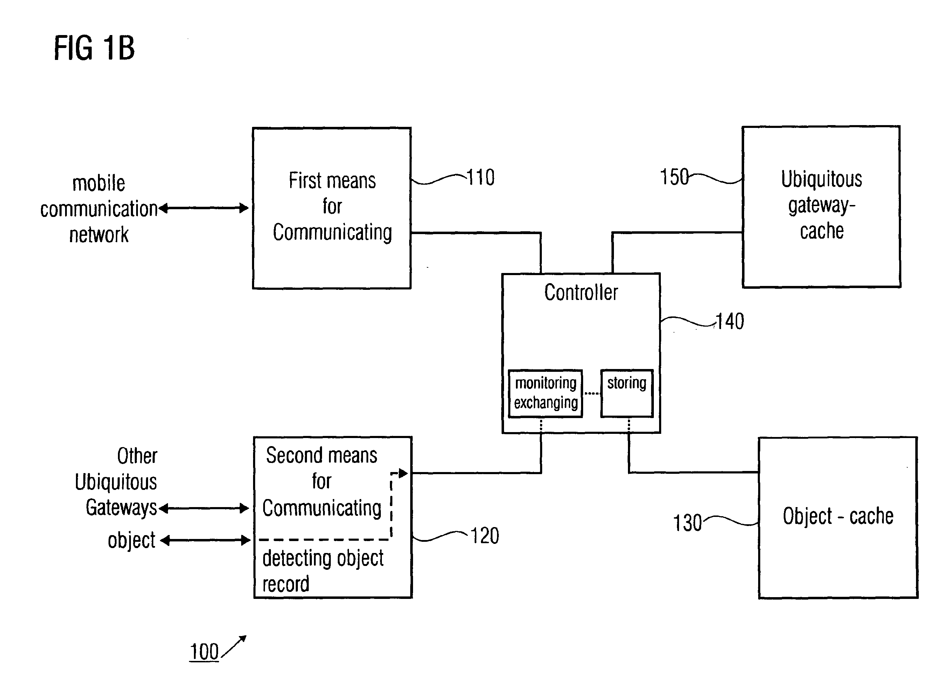

Fig. 1b shows another embodiment of a Ubiquitous Gateway 100 further comprising a UG cache 150 for temporarily storing a UG record comprising a UG record identification, a UG identification and a UG location, and wherein the controller 140 is adapted for repetitively monitoring other Ubiquitous Gateways through the second means 120 for communicating, and for storing UG records on monitored Ubiquitous Gateways in the Ubiquitous Gateway cache 150, and for repetitively exchanging Ubiquitous Gateway records from the Ubiquitous Gateway cache 150 through the second means 120 for communicating with the other Ubiquitous Gateways, and for forwarding the object query to another Ubiquitous Gateway based on a Ubiquitous Gateway record from the Ubiquitous Gateway cache 150.

In embodiments, the object record may further comprise one of or a combination of the group of a time stamp of the object last seen time, a Ubiquitous Gateway identification of a Ubiquitous Gateway having monitored the object, a period during which the object was monitored continuously by a Ubiquitous Gateway, an estimated last seen position, whether the object is movable or non-movable, a history of Ubiquitous Gateways that have exchanged the object record, or the number of hops the object record has propagated.

In other embodiments, the Ubiquitous Gateway record may further comprise one of or a combination of the group of a time stamp, when the Ubiquitous Gateway was last monitored, an estimated last seen position of the Ubiquitous Gateway, an average speed of the Ubiquitous Gateway, a standard deviation of the Ubiquitous Gateway speed, a history of Ubiquitous Gateways having forwarded the Ubiquitous Gateway record or a number of hops the Ubiquitous Gateway record has propagated.

In embodiments, the controller 140 can be adapted for updating the object record in the object cache 130 or the Ubiquitous Gateway record in the Ubiquitous Gateway cache 150, wherein object record or UG record can also be received from other UGs. The controller 130 can be adapted for discarding an older object record if a newer object record is available. Accordingly, the controller 140 may be adapted for discarding an older UG record, if a newer UG record is available. The controller 140 can be adapted for monitoring objects in a vicinity periodically and for updating a object record in the object cache 130, when a new object record becomes available. The period for monitoring objects in a vicinity may span between ten seconds to five minutes.

In embodiments, the controller 140 may be adapted for monitoring UGs in a vicinity periodically and for updating a UG record in the UG cache 150 when a newer UG record becomes available. Moreover, the controller 140 can be adapted for periodically exchanging an update object record or an update UG record with UGs in the vicinity. The vicinity may be determined by the coverage area of the second means 120 for communicating, which may for example be an NFC. In other embodiments, the vicinity may be determined by a number of hops, a UG communicated through using the second means 120 for communicating.

In other embodiments, the controller 140 can be adapted for considering a lifetime of an object query, and for discarding an object query when the lifetime has expired. The controller 140 can be adapted for responding to an object query before the lifetime expires with an update record on the query object to the query origin. Moreover, the controller may store Ubiquitous Gateway identifications of Ubiquitous Gateways to which an object query has been forwarded and for requesting cancellation of the object query to all UGs to which the object query was forwarded when the lifetime expires, the query object is found or the object query is cancelled.

Moreover, the controller 140 may establish a limit, e.g. in terms of a number of hops, on how many times an object query can be forwarded. A Ubiquitous Gateway 100 may further comprise a means for determining its own position, which can be realized using a GPS receiver (GPS = Global Positioning System). In another embodiment, the UG 100 may further comprise a Bloom filter being prepared with an object record and a UG record.

In embodiments, the first means 110 for communicating may be adapted for communicating in a cellular mobile communication network. The first means 110 for communicating may be adapted for communicating according to GSM, UMTS, LTE, FOMA (FOMA = Freedom Of mobile Multimedia Access), etc. The second means 120 for communicating may be adapted for communicating according to DECT (DECT = Digital enhanced Cordless Telephone), Bluetooth, RFID, ISM, WLAN, etc.

The controller 140 can be further adapted for receiving and installing a search query for the query object, the controller 140 being further adapted to proactively search for the query object as a response to a received and installed search query. The means 110 for communicating with the mobile communication network may be adapted for communicating using a communication protocol, wherein the communication protocol is such that the query object can not communicate using the communication protocol.

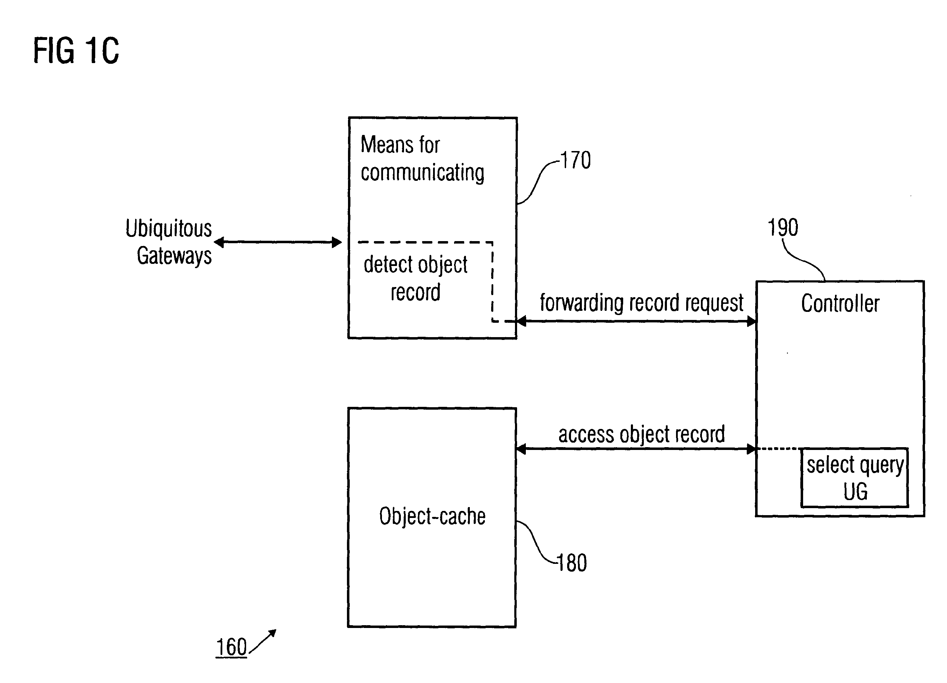

Fig. 1c shows an embodiment of a GQM 160 for operating in a mobile communication network comprising a plurality of Ubiquitous Gateways, a Ubiquitous Gateway being mobile and adapted for communicating in a mobile communication network, as well as for storing object record. The UG may correspond to the UG 100 described above. The GQM 160 comprises a means 110 for communicating with a plurality of Ubiquitous Gateways and adapted for detecting an object record received from a Ubiquitous Gateway. The GQM 160 further comprises an object cache 180 for temporarily storing an object record reported by a Ubiquitous Gateway, an object record comprising an object record identification, an object identification and an object location.

The GQM 160 further comprises a controller 190 for receiving a record request for a query object from a query origin, and for forwarding the record request to a query UG, wherein the controller (190) is adapted for accessing the object record and for selecting the query UG from the plurality of UGs based on the query object record temporarily stored in the object cache 180 if available or randomly otherwise.

In embodiments, the controller 190 may be adapted for further storing a Ubiquitous Gateway identification on a UG which has reported an object record. The controller 190 may select the query UG based on the UG, which reported the object record on the query object, i.e. the query object record. The controller 190 can also select the query UG based on a query object location stored in the object cache 180 and on the query UG location.

The object record may further comprise one of or a combination of the group of a time stamp of the object last seen time, a Ubiquitous Gateway identification of a Ubiquitous Gateway having monitored the object, a period during which the object has continuously been monitored by a Ubiquitous Gateway, an estimated last seen position, whether the object is movable or not movable, a history of Ubiquitous Gateways that have exchanged the object record or a number of hops the object record has propagated.

The controller 190 may be adapted for installing a search query at the query UG, the query UG using NFC to forward the search query for the query object to another UG and for querying the query object proactively. Moreover, the controller 190 may receive a object record based on a forwarding of the search query from the query UG to another UG, the other UG may also be forwarding the search query.

The controller 190 may be adapted for associating a lifetime with a query request and for notifying the query origin when the lifetime of a search request has expired. The controller 190 can be adapted for forwarding the query request to a query UG, which is likely to have newer object record than the object record from the object cache 180. The controller 190 may forward the query request to UGs being located in a vicinity of an estimated query object location, the vicinity being determined by the mobile communication network, or from the object cache 180. The controller 190 can be adapted for forwarding the query request to a predetermined number of query UGs. The controller 190 may install the search query to a predetermined number of UGs. The controller 190 can provide the newest search object location to the query origin. The controller 190 can be adapted for receiving the query request from a Ubiquitous Gateway or a network node from the mobile communication network. The means 170 for communicating can be adapted for communicating using a communication protocol, wherein the communication protocol is such that the query object can not communicate using the communication protocol.

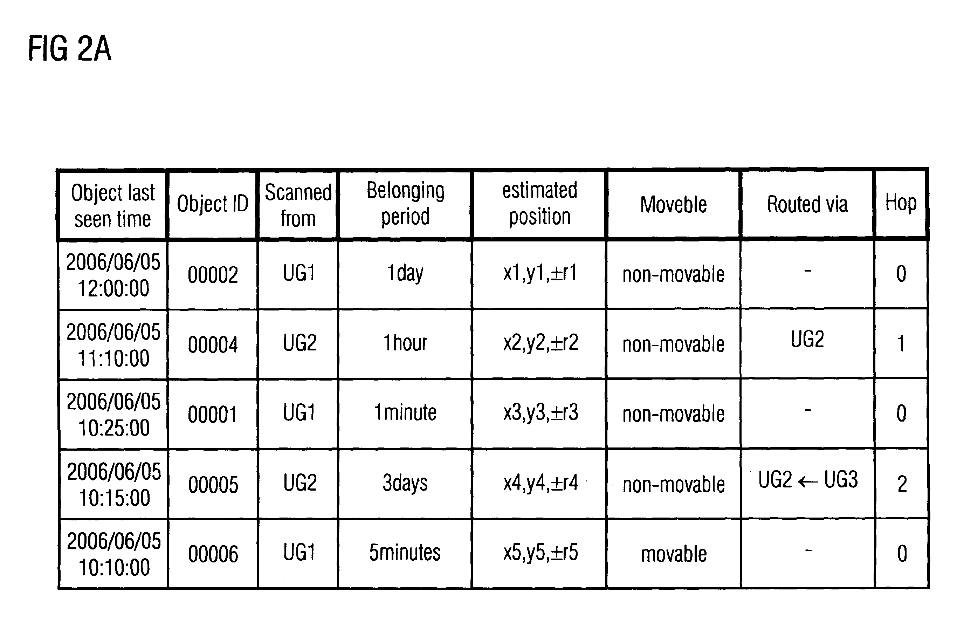

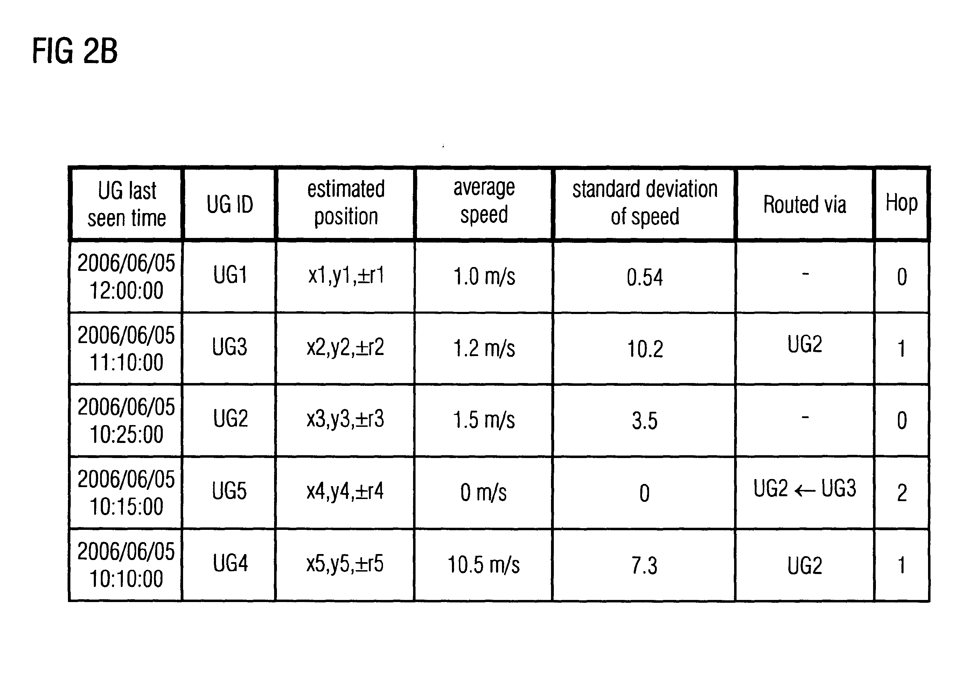

In the following, two detailed embodiments will be described. These embodiments can be especially efficient for object search in a local domain, and can also be applied for a global domain, for example, in combination with an algorithm as described by C. Frank, P. Bolliger, F. Mattern and W. Kellerer. In the first embodiment, a centralized server is may not be present as the embodiment can realize a totally distributed object tracking algorithm. According to the above description, each embodiment of a UG has an object cache which contains information about observed objects or so-called object information or record. An embodiment of an object cache in a UG is depicted in Fig. 2a. Moreover, a UG comprises a UG cache which contains information about observed UGs or so-called UG information or record. An embodiment of a UG cache in a UG is depicted in Fig. 2b. Furthermore, these two caches are periodically exchanged among UGs in the vicinity through NFC in an embodiment. The vicinity can for example be determined by the one hop neighbors of the UG through NFC, i.e. the second means 120 for communicating.

As can be seen from Fig. 2a, a record in the object cache may comprise an object last seen time, an object ID, an ID of a UG that scanned the object, the period in which the object was continuously observed by the UG, an estimated last seen position, whether the object is movable or not, a history of the UGs that propagated this record, a hop number of record propagation, and so on.

Accordingly, Fig. 2b shows an embodiment of a UG cache which may comprise a UG last seen time, a UG ID, an estimated last seen position, an average speed of the UG, a standard deviation of the UG speed, a history of UGs which forwarded this record, a hop number, and so on.

In embodiments, these cache sizes may be limited and overflowing old records may be discarded. In embodiments, a cache stored by a UG may periodically be sent to the one hop neighbors. The receiving neighbor UGs may compare the records with their own records, add missing records, overwrite older own records or discard older received records. The hop count and route of records may be updated accordingly. As the cache size can be limited, old entries may be discarded from the cache in embodiments.

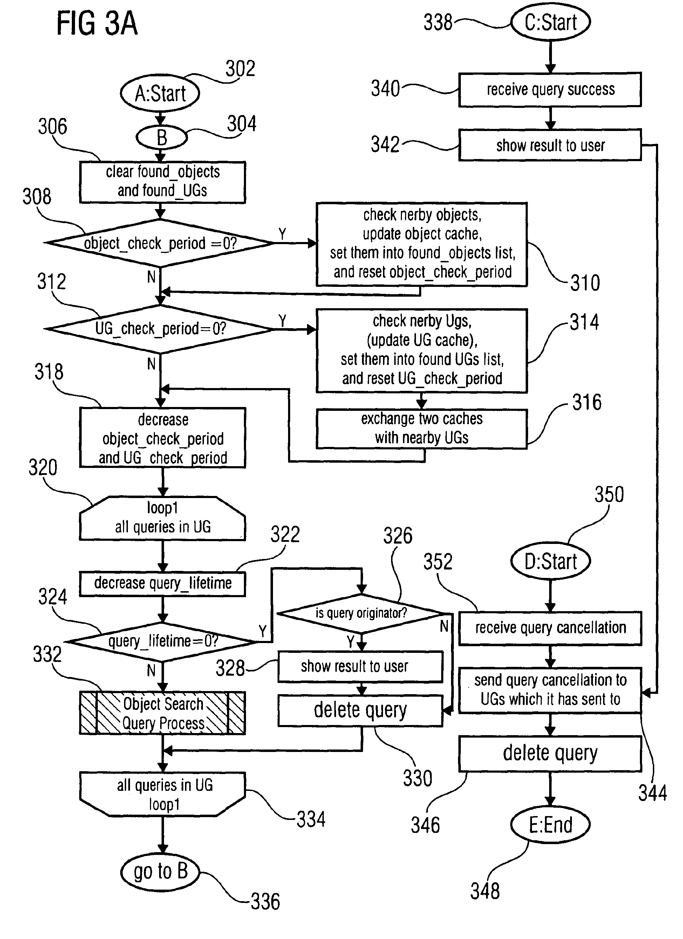

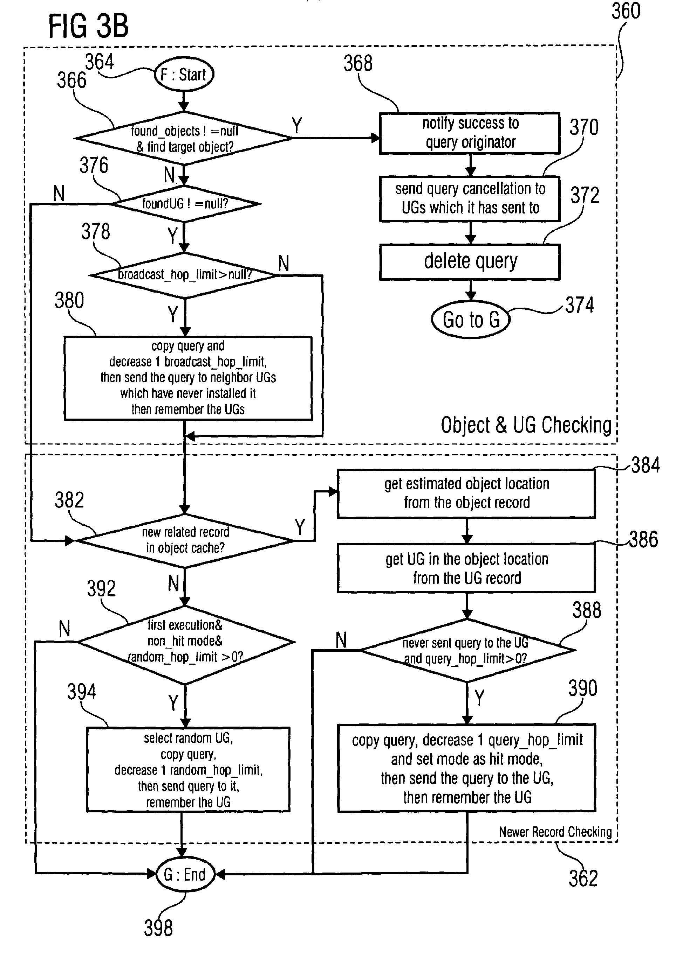

In the following flowcharts of embodiments will be described and are depicted in Figs. 3a and 3b in detail. Figs. 3a and 3b illustrate an embodiment of a mechanism implemented in a first embodiment utilizing the distributed approach. Fig. 3a shows a flowchart of an embodiment of a main loop that a UG can continuously run, even if no query is installed.

According to Fig. 3a on the left-hand side, the algorithm of the UG is started in step 302, which is followed by step 304 and also labeled "B", which is a return point for the main loop executed at a UG. A UG_{ExE}, which currently executes this main loop, observes objects in its vicinity and periodically updates its object cache, and stores them into a found_object array, where found_objects is a variable used for the array. In the flowchart depicted in Fig. 3a, this is indicated by step 306, and which the variables found_objects and found_UGs are cleared. In step 308, the object check period is evaluated, which is realized by a counter object_check_period which will be decreased later on. If said counter is 0, step 308 is followed by step 310, in which nearby objects are checked, the object cache is updated and the variable found_objects is updated, i.e. a list of the objects found in the object check period is reset. Accordingly, a check period for UG monitoring is checked in step 312, wherein the value of the variable UG_check_period is examined. If the counter is 0, step 312 is followed by step 314, in which the nearby UGs are checked, the UG cache is updated, a list found_UGs is updated, and UG_check_period is reset. Moreover, in step 316, the two caches, i.e. the object cache and the UG cache, are exchanged with nearby UGs, e.g. through NFC or the second means 120 for communicating.

In step 318, the abovementioned counters are decreased. The period for checking the vicinity of the UG with respect to objects is determined by the value object_check_period, for example the period is 1-5 minutes. The UG_{EXE} also periodically observes UGs in its vicinity, according to the variable UG_check_period, and stores them into a list, for example the found_UGs array. The period for checking the UGs in the vicinity is counted by the value UG_check_period. During this period, UG_{EXE} also exchanges its object cache and UG cache with neighboring UGs via NFCs in step 316. In embodiments the UG_{EXE} can reduce the NFC traffic by sending only cache differences and not exchanging the entire cache all the time.

After this, the UG_{EXE} executes all installed queries according to a loop, which starts in step 320. In step 322, UG_{EXE} decreases a variable query_lifetime, which is used to determine and count down the lifetime of queries. In step 326, the UG_{EXE} at first checks the lifetime of the query. If it has expired, i.e. if query_lifetime = 0, it is checked in step 326 whether the UG_{EXE} is the originator of the query. If so, the UG_{ExE} notifies the user that the query has failed in step 328 and deletes the query in step 330. If the UG_{EXE} is not the originator of the query, the query is immediately deleted in step 330. If in step 324 the query_lifetime has not expired, the object is searched and the query process is carried out in step 332, which shall be detailed in Fig. 3b. Step 334 ends the query loop, thus steps 320 to 334 are carried out for each query. Step 334 is followed by step 336 in which the algorithm returns to step 304 or "B".

On the left-hand side of Fig. 3a, a flowchart starting with step 338 is depicted. This process is started in the present embodiment when the UG_{EXE} receives a query success from another UG in step 340, which itself has originated. It would then show the result to the user in step 342, and proceed to step 344. In step 344, the UG_{EXE} would send a query cancellation to UGs to which it sent the query. Step 344 is followed by step 346 in which the UG_{EXE} deletes the query before ending the sub-routine in step 348.

Another scenario is considered when the UG_{EXE} participated in the querying of an object for another UG, in this case the sub-routine starts in step 350 whereupon the UG_{EXE} may receive a query cancellation from another UG is step 352. In this case, the UG would proceed to step 344 and send query cancellations to UGs to which it has itself sent the query, and deletes the query in step 346 before ending the sub-routine in step 348.

If a query origin, for example UG_{origin} would like to search an object O_{D}, it can originate an object query with "non-hit" mode and at first installs the queries on itself. The "non-hit" mode is used to describe a mode in which the query is installed without any related record on O_{D}. After installing the query, UG_{origin} becomes the first UG_{EXE} of this query and executes an object search query process as it shall be described according to Fig. 3b. This algorithm consists mainly of two phases 360 and 362, which are indicated with dotted boxes in Fig. 3b. The first phase 360 is also termed as "Object and UG checking" that observes objects or UGs in its vicinity. The other phase, phase 362 is also termed as "Newer Record Checking" phase, which checks whether there is a newer record in the object cache of UG_{EXE} and sends a query to the next appropriate UG.

Embodiments may utilize several different criteria for deciding on whether a record is newer. The simplest criterion is that the information generated time T₁ in a record R₁ is newer than an information generated at time T₂ in another record R₂, it means R₁ is newer if T₁>T₂. Another criteria can be that the record age A₁ (= current time - T₁) is lower than a rate α of another record age A₂ (=current time - T₂), means that R₁ is newer, if A₁<aA₂, for example α = ½. Other criteria that may not only be time criteria may also be used, for example, also a distance criteria. For example, if a generated position of a record R₁ is far away from a generated position of R₂, newness may be compared by T₁>T₂, otherwise compared by A₁<αA₂. In the following implementation, the simplest criteria T₁>T₂ is adopted, however, embodiments are not restricted to this criterion.

The flowchart in Fig. 3b starts with the "Object and UG Checking" phase 360 in step 364 which is also labeled "F". In the "Object and UG checking" phase 360, in step 366 it is checked on the basis of the variables found_objects and find_target_object, whether the target object is found. If so, UG_{EXE} notifies success to UG_{origin} in step 368 and sends query cancellation to UGs to which it has sent the query to in step 370. After this, the query can be deleted in step 372 and the algorithm proceeds in step 374, which jumps to point 398 in which the algorithm ends. If possible, UG_{EXE} asks for a query cancellation in step 370 to other UGs to which it has sent the query.

If the check in step 366 is not successful, in step 376 it is checked whether neighbor UGs are present. If neighbor UGs are found in step 376, UG_{EXE} checks in step 378 whether a broadcast hop limit is exceeded, and if not, it copies the query to these UGs in step 380. In step 378 the variable broadcast_hop_limit is checked as to whether it is still positive. If so, in step 380, the UG_{EXE} copies the query and decreases said variable by 1. Moreover, it sends the query to neighbor UGs which did not previously install the query and remembers said UGs. The query_hop_limit is a variable to count the remaining times the query can be propagated in the vicinity of UG_{EXE} and it might be set to 3-10 as a default setting for example, where other values may be used in other embodiments to leverage between NFC and global network usage.

The copied query has a broadcast_hop_limit with one hop decreased. If a neighbor UG has already installed this query, UG_{EXE} does not send the query again. If no neighbor UGs are found in step 376 or respectively if the query is copied to neighbor UGs in step 380, the UG_{EXE} enters the "Newer record Checking" phase 362 in step 382.

In step 382, the UG_{EXE} checks whether a new record on O_{D} is in the object cache. If there is a new record, the UG_{EXE} proceeds in step 384 and gets the estimated object location from the object record followed by step 386 in which it gets a UG in or near the object location from the UG record. Thus, if there is a new record, UG_{EXE} gets the last seen position in time, chooses an appropriate UG_{NEXT} from the UG cache, and then sends a new query to the UG_{NEXT}.

In regard to this, in step 388 it is checked whether a query has already been sent to this UG, and if not, a query is copied to said UG in step 390. In step 388, there is the counter query_hop_limit, which is used to count the remaining times the query can be propagated according to the new record, which might be set to 3-10 as a default setting for example. This is a different value from the broadcast_hop_limit. In step 390, the query is copied to the new UG, the query_hop_limit is decreased by 1 and the set mode is set to "hit" mode, then the query is sent to a UG and the UG is remembered. This new query has decreased the query_hop_limit and it is set to "hit" mode which contains said information. If the query_hop_limit is 0, or if the UG_{NEXT} has already a starter query, the UG_{EXE} does not send the query and proceeds to step 398 following step 388. UG_{EXE} continues executing the query, even after sending the query to UG_{NEXT}.

If in step 382 it turns out that there is no new related record in the object cache, step 382 is followed by step 392. In step 392, it is checked whether the query is running as a "non-hit" mode, if it is the first loop, and if there is still no related record. If so, the algorithm randomly selects a UG in step 394 and forwards a copied query to it with a decreased random_hop_limit. Otherwise, step 392 is followed by step 398. If a chosen UG does not have a related record, it also forwards a copied query to another random UG with a decreased random_hop_limit. Thus, "non-hit" mode queries are forwarded one after the other until the related record is found or random_hop_limit becomes 0. This random_hop_limit is different from query_hop_limit. It is only used for random hopping, and during random hopping query_hop_limit is not decreased.

A UG which receives a query acts as the UG_{EXE} and executes the same flow. That is, it checks its object cache and UG cache and then if there is a newer record, it chooses a next UGₙₑₓₜ to which it ends the query. Each UG_{EXE} remembers UGs that it has sent the query to and adds UG_{EXE} as parent in the query. Thus, query loops can be avoided.

By tracing UGs that know a newer location of O_{D}, the algorithm can eventually find O_{D}. The UG_{EXE} that finds O_{D} notifies the success to UG_{origin}. If possible, UG_{EXE} asks query cancellations to UGs to which UG_{EXE} has sent the query. After receiving a success report, compare step 338 in Fig. 3a, UG_{origin} notifies success to the user and then asks for a query cancellation to the UGs to which UG_{origin} has sent a query. Then, every UG_{EXE} which is notified query cancellation asks recursively query cancellation to UGs to which UG_{EXE} has sent a query, then delete its query, compare steps starting with step 350 in Fig. 3a.

Every UG should be able to determine its own position in order to estimate the object position and its UG position. For this, not only GPS may be used, but also cell information of a cellular network. Furthermore, if a UG does not have a GPS function, it may get a more accurate position by exchanging GPS information among UGs or carry out a triangle measurement.

Additonally, a Bloom filter, cf. Bloom B.H. "Space/Time Trade-offs in Hash Coding with Allowable Errors"; Communications of the ACM, 13(7):422-426; 1970; may be used. A bloom filter is a space efficient probabilistic data structure that is used to test whether an element is a member of a set. Each UG may prepare a Bloom filter for every certain area and every certain time slot, and the overflowing record of a cache is added into the Bloom filter. It enables that UG_{EXE} infers where the searching object is and gets a higher probability to select the UG which has a related record about O_{D} than with a random selection of a UG.

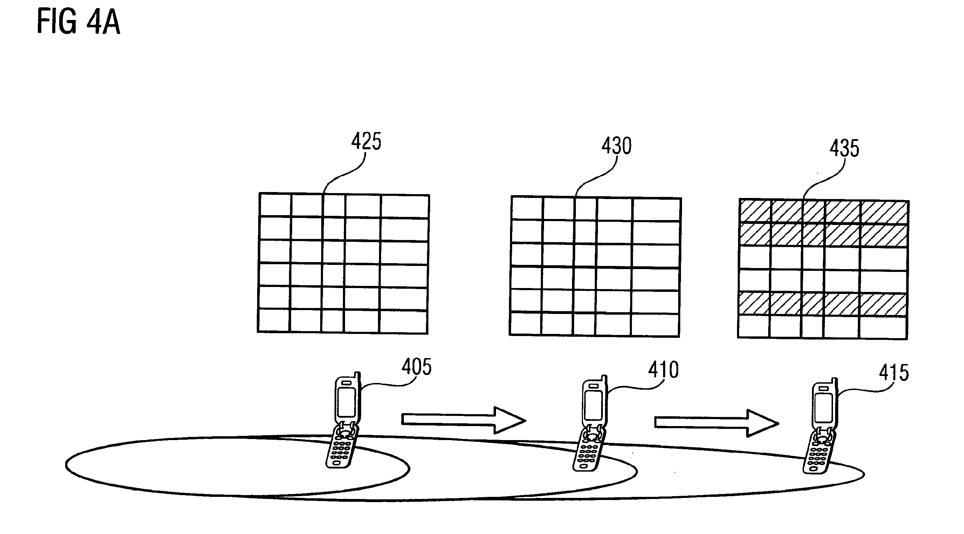

Fig. 4a illustrates the basic idea of the distributed information sharing. Fig. 4a shows three UGs 405, 410 and 415. Each of the UGs 405, 410, and 415 has an information cache 425, 430 and 435, as for example an object cache and/or a UG cache. Each UG encounters location information on objects in its vicinity. The information caches 425, 430 and 435 have a limited size. According to the above described examples, they may be sorted by a certain metric, for example information generated time. As the arrows in Fig. 4a indicate, the information caches are distributed among the UGs, each UG may only get the difference and therewith shrink the data from its neighbor UGs. An index may be broadcasted periodically to neighbors in order to spread out the data. As NFC may be used to spread the data, the data spread is naturally attenuated. Embodiments may therefore not care about hop limits of information routing.

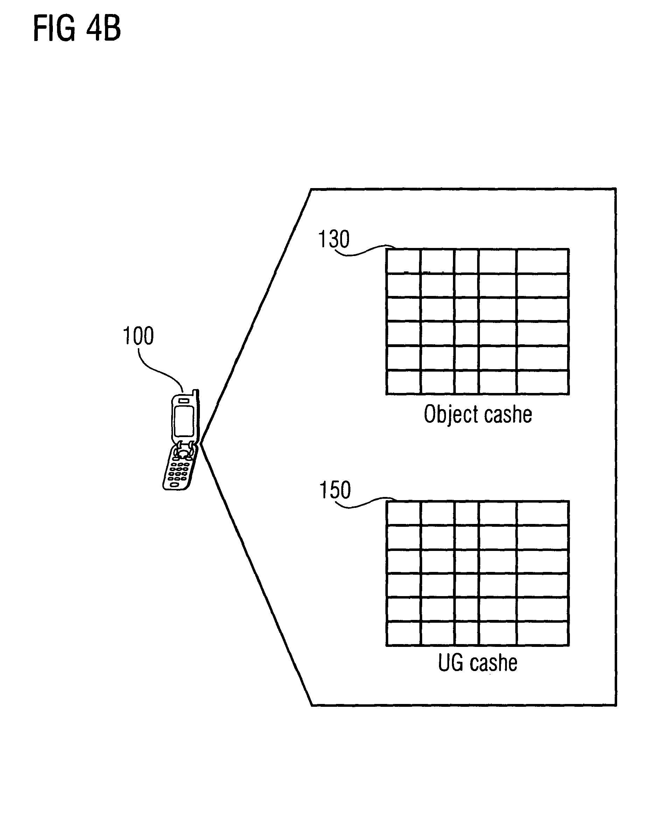

According to the above described embodiment, Fig. 4b illustrates a Ubiquitous Gateway 100, comprising an object cache 130 and a UG cache 150. The UG cache 150 may record UG locations sorted by information generated time. The object cache 130 may record object locations sorted by information generated time.

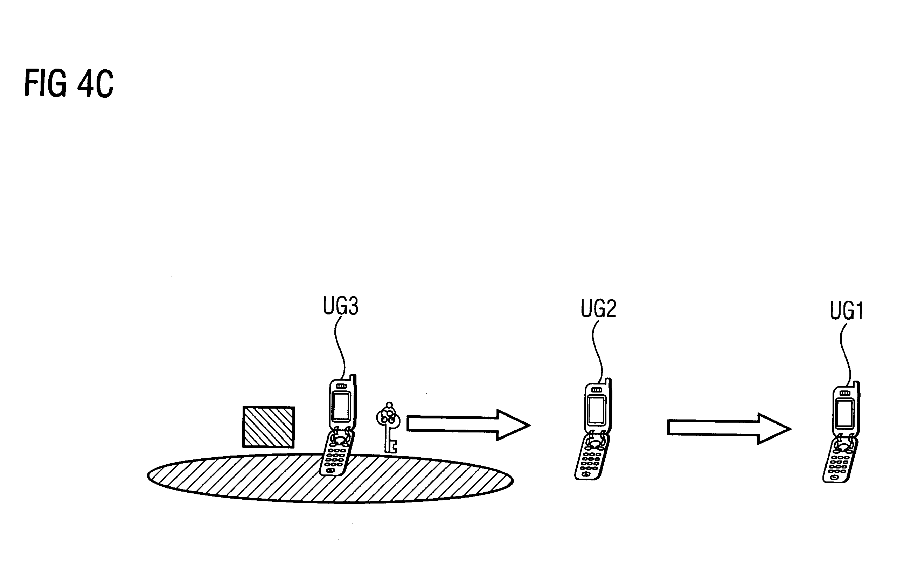

Fig. 4c illustrates another scenario showing three UGs, UG1, UG2, and UG3. Fig. 4c demonstrates that object information or record is propagated from UG3 to UG2, which may be further forwarded to UG1. The objects seen by UG3 are exemplified in Fig. 4c as a key and a wallet.

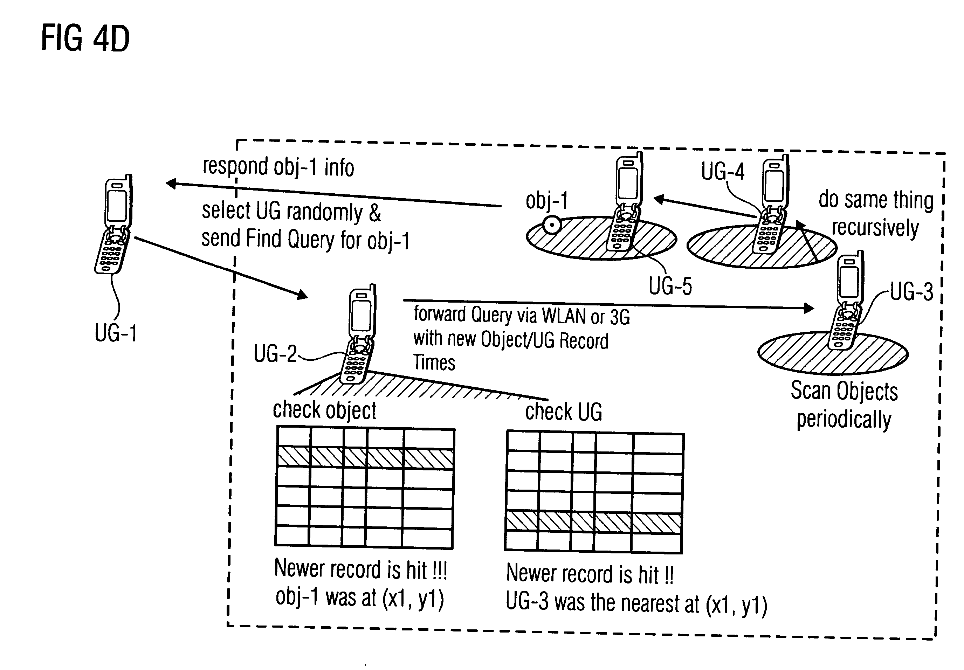

In order to provide another example, Fig. 4d shows a scenario where a UG-1 sends a query to a UG-2. UG-2 checks its object cache and finds a record on the search object obj-1 and determines that said object was at coordinates (x1, y1). Moreover, UG-2 checks its UG cache and finds that UG-3 was the nearest to the coordinates (x1, y1). Consequently, UG-2 forwards the query, for example, via WLAN or 3G (3G = Third Generation Mobile Communication System) with new object/UG record times to UG-3. UG-3 does the same to UG-4, which in turn does the same to UG-5, which finally finds the object obj-1 and responds with the obj-1 information to UG-1. In the case that UG-2 had not found an adequate UG, UG-2 responds with "failure". Then UG-1 may have selected another user, for example, UG-3, UG-4 or UG-5, may have expanded the query.

In the following, a second embodiment shall be described, which uses a central server called Global Query Manager (GQM = Global Query Manager) as it was described above. The GQM supports a more efficient search of an object. The GQM uses the same object cache as in the mechanism described above, e.g., as illustrated in Fig. 1c or Fig. 2a. Moreover, the involved UG also comprises an object cache according to Figs. 1a and 1b, and exchanges it periodically with its neighboring UGs. It should be noted that the embodiment presently described does not require the presence of a UG cache at a UG. The CQM can for example determine an abstract UG position with an accuracy of for example 100-500m by AFLT (AFLT = Advanced Forwarding Trilateration) or asynchronous hybrid positioning based on base station information.

The GQM can also obtain records from the UG on demand, for example, when installing a query on a UG. Furthermore, it is not assumed that the GQM periodically collects cache information from the UGs, and moreover, it is not assumed that UGs report or update their cache to the GQM. However, in this embodiment, the GQM stores records from the UGs in its object cache. In some embodiments, the GQM may use the information from the object cache to gain from the probability that certain records are already available at the GQM when a query is started, and that it has a more efficient search compared to the above described embodiment when a UG only refers to its own object cache.

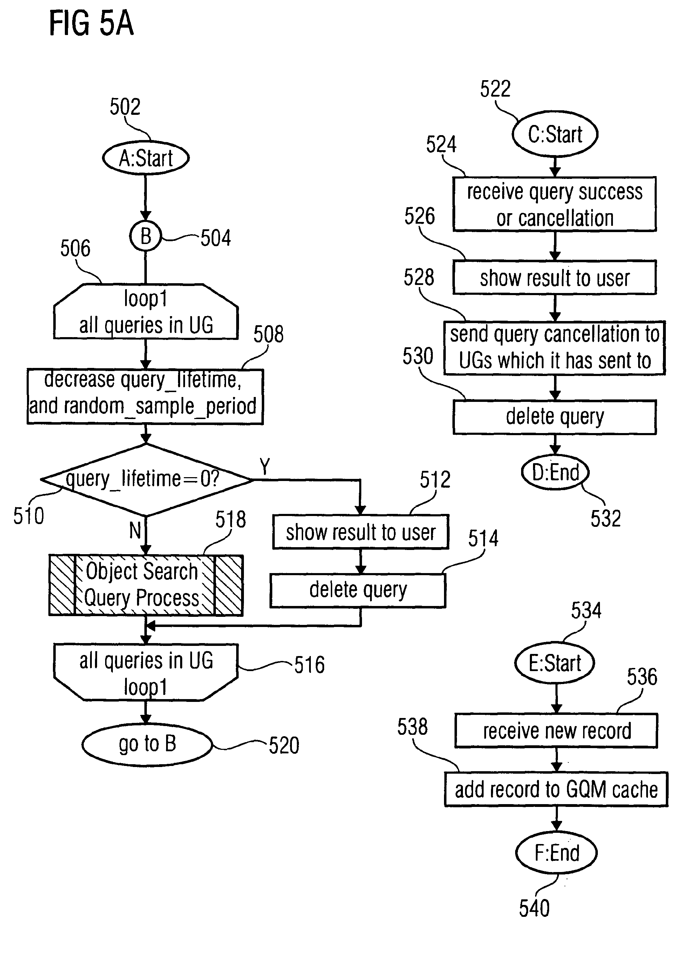

Fig. 5a shows a flowchart of an embodiment of a GQM, wherein the steps displayed in Fig. 5a can be carried out all the time, even when no query is installed. The flow starts from step 502, also labeled with "A". Step 502 is followed by step 504, which is a procedural return point. In this embodiment, the GQM then executes a loop which begins in step 506 and ends in step 516. Within the loop, the GQM can accordingly execute all installed queries. First, in step 508, the GQM increases two counters, namely query_lifetime and random_sample period, which determine the lifetime of a query and a counter for randomly installed queries if no object records could be found. This shall be detailed in the following. In step 510, the GQM checks whether the lifetime counter has reached 0, i.e. if the lifetime of a query has expired. If the lifetime of a query has expired, which is checked in step 510, the GQM notifies the user in step 512 that the query has failed. After the notification of step 512, the query is deleted in step 514 after which the end of the loop is reached in step 516. If in step 510 the lifetime of the query has not expired, i.e, the query is still alive, the GQM executes the query process in step 518. After executing the query process, the end of the loop is reached in step 516. The loop runs across all queries, after all queries have been executed, the GQM returns to the return point "B" in step 520.

On the right-hand side of Fig. 5a, two more flowcharts are depicted, which illustrate the GQM behavior in the present embodiment, when a query success or a query cancellation is received. The first process starts with step 522 or "C". The first step is 524, wherein the query success or cancellation is received. If a query success or cancellation is received, the result is shown to the respective user in step 526, and the query cancellation is forwarded in step 528 to UGs to which the query has been sent. In the next step 530, the query is deleted, upon which the procedure ends in step 532.

On the right-hand side of the bottom of Fig. 5a, the procedure is depicted as a flowchart for a case in which a new record of object information is received. The flow starts in step 534 followed by step 536 in which the new record is received. When the new record has been received, in step 538 the record is added to the GQM cache, i.e., the object cache. The procedure then ends in step 540 or in "F".

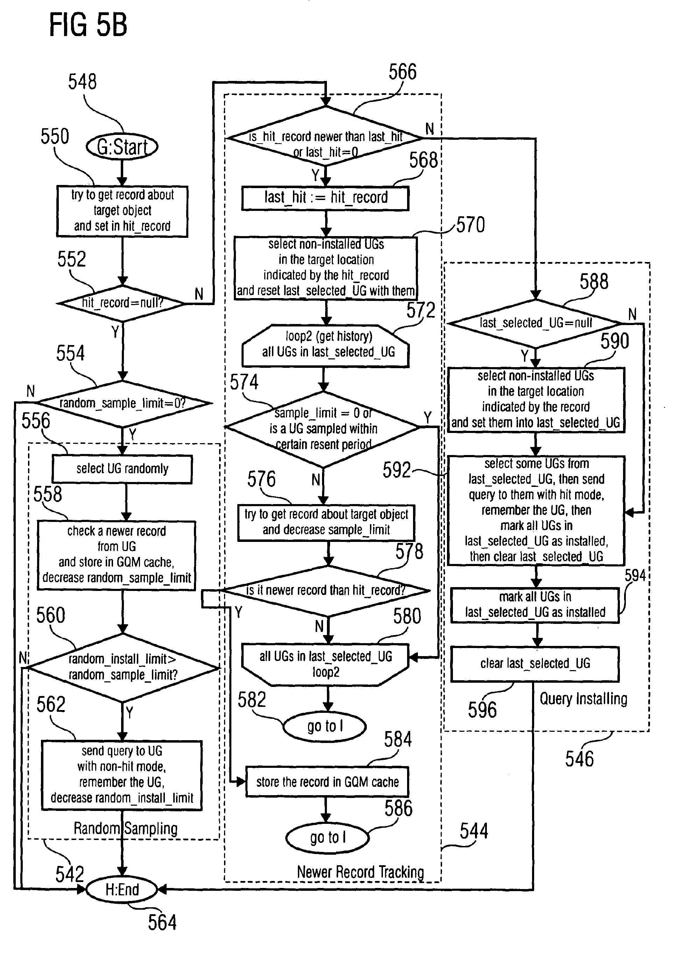

Fig. 5b depicts a flowchart of an embodiment of the procedure, when the GQM receives a query from a user to search for a query object O_{D}. The flowchart depicted in Fig. 5b can be subdivided into three phases, namely "Random Sampling" phase 542, "Newest Record Tracking" phase 544, and "Query Installing" phase 546. The search query process starts with step 548 or "G", which is followed by step 550 in which the GQM checks whether there is a new record on O_{D} in the GQM object cache and sets it in the parameter hit_record, if a record on the target object is present. If the GQM, for example, stores a result of a previous search, the GQM could use it. In step 552, it is checked whether a record is available, or not. If no record is available in step 554 a counter random_sample_limit is checked, which determines whether a limit of randomly selected UGs for finding newer records is reached. If the limit is not reached, step 554 is followed by step 556, in which UGs are randomly selected. If there is no related record in the GQM cache, the GQM chooses a UG and checks whether this UG has related records. Basically, this UG is chosen randomly, but if the GQM also has some information of user's behavior patterns, previous search result in advance, the GQM can filter all possible UGs according to the highest likelihood of places where the object could be found.

Moreover, in this embodiment there are two sampling limits, random_sample_limit and sample_limit. The former is used when no record is found, i.e., in a "non-hit" mode and the latter is used after a record is found, i.e. in a "hit" mode. Simulations will be presented in the following, in which a random_sample_limit was set to 20 and a sample_limit was set to 50. If in step 560 the random_install_limit is larger than the random_sample_limit, the in step 562 a query is sent to randomly chosen UGs with "non-hit" mode, the UGs are remembered and the random_install_limit is decreased.

If there is no record found, the counter random_sample_limit is decreased and another UG is chosen randomly in step 556. This random sampling is continued until a record on O_{D} is found, or random_sample_limit becomes 0 for which in step 554 the "Random Sampling" phase 542 is skipped. If the random_sample_limit becomes less than random_install_limit in step 560, wherein random_install_limit is used for counting query installation with a "non-hit" mode, the GQM sends a query to the chosen UG in step 562 with "non-hit" mode and decreases the random_install_limit. The procedure then ends in step 564.

If a record is found in step 550, or the GQM has an old record in the GQM cache, the GQM starts the new record tracking file 544 following step 552. At first, in step 566 the GQM checks whether the found hit record is newer than the last hit record and respectively, whether a last hit record was not at all present. If so, it sets the variable last_hit to the current hit_record in step 568 and selects non-installed UGs in the target location indicated by the hit_record and resets the last_selected_UG with them in step 570. The GQM checks whether the current hit_record is newer than the previous record at the last loop, which is called last_hit. At the first loop, hit_record should be newer, as there is no last_hit. The GQM then obtains the last seen position from the hit_record and chooses UGs that are closer to the respective position and has not previously had the query about O_{D} installed in step 570. The GQM remembers these selected UGs as last_selected_UG. Again, a counter is utilized in step 574 in order to check whether the limit of the installed query is reached. If the limit is not reached in step 576, the GQM tries to get a record on the target object and decreases said counter, namely sample_limit.

In step 578, the GQM checks whether the record is newer than the hit_record. If the record is not newer, then the loop which started in step 572 is ended in step 580. If in step 574 it turns out that the sample limit is reached, it is immediately followed by step 580. If in step 578, it turns out that the record is newer than hit_record, the process jumps to step 584 in which the newer record is stored in the GQM cache followed by step 586, in which the process returns to the starting point. Step 580 is followed by step 582, which also jumps back to the start of the process. The GQM checks whether the selected UGs has a newer record with respect to O_{D}. If a newer record is found, the GQM stops checking, stores the record in the GQM cache in step 584 and returns to the starting point. Newer records can be found in this manner one after the other, the GQM may always use the newest record.

When there is no more new record, i.e. when the variable hit_record equals the variable last_hit in step 566, the GQM enters the "Query Installing" phase 546 and installs queries to the UGs around the position in the nearest record.

The GQM then starts with step 588, in which it is checked whether UGs have already been selected. If so, in step 590 non-installed UGs are selected in the target location indicated by the record and these UGs are remembered in a variable_last_selected_UG. This step is followed by step 592 in which some UGs from the last selected UGs are chosen either following step 590 or step 588, if UGs have already been selected. In step 592 queries are sent with "hit" mode to these chosen UGs, the UGs are remembered, being respectively marked in the last_selected_UG variable. In step 594 all selected UGs are marked in the last_selected_UG as "already installed". In other words, the GQM selects all UGs or some UGs from last_selectd_UGs stochastically and installs a query to them. The query itself may utilized another counter query_hop_limit, which e.g. be set to 2, and may be set in "hit" mode and it may contain the record information. The GQM then marks all UGs in last_selected_UG as "already installed", in step 594, and finally, clears last_selected_UGs in step 596. The reason for selecting UGs randomly is that they are close to each other and a UG can broadcast the query via NFC in parallel not using the cellular connection.

In other embodiments, instead of random selection, for example, a timing could be used before the GQM installs another UG. The GQM can then get neighbor UG information of the UG and may avoid selecting these neighbor UGs. The GQM may then always monitor the position indicated by the record and if there are new non-installed UGs, the GQM may send a query. Step 596 is then followed by step 564, in which the process ends.

If a newer record is reported, as it was described in Fig. 5a with steps 534 to 540, the GQM can execute the "Newest Record Tracking" phase 544 and the "Query Installing" phase 546.

In one embodiment the GQM always searches objects around the newest record. This can also work when the object is moving, as it can immediately follow the newest record. As a further option, a more efficient search performance may be obtained in embodiments if the GQM knows the result of last searches and use it as a starting point for a search for the same object rather than randomly selecting a starting point. Otherwise, if the GQM has some information of user's behavior pattern, previous search result, etc., in advance, the GQM may filter all possible UGs according to the highest likelihood of places where the object could be found.

In addition, in other embodiments, Bloom filters may used as an option. The UG can then reflect overflowing records into the Bloom filter, and the GQM can get the Bloom filter at the same time that the GQM checks the object caches of the UGs. In the "Random Sampling" phase 542, the scope of the positions where the O_{D} might be at could be limited, and a better performance may be obtained, however at the price of a higher network load when gathering the Bloom filter.

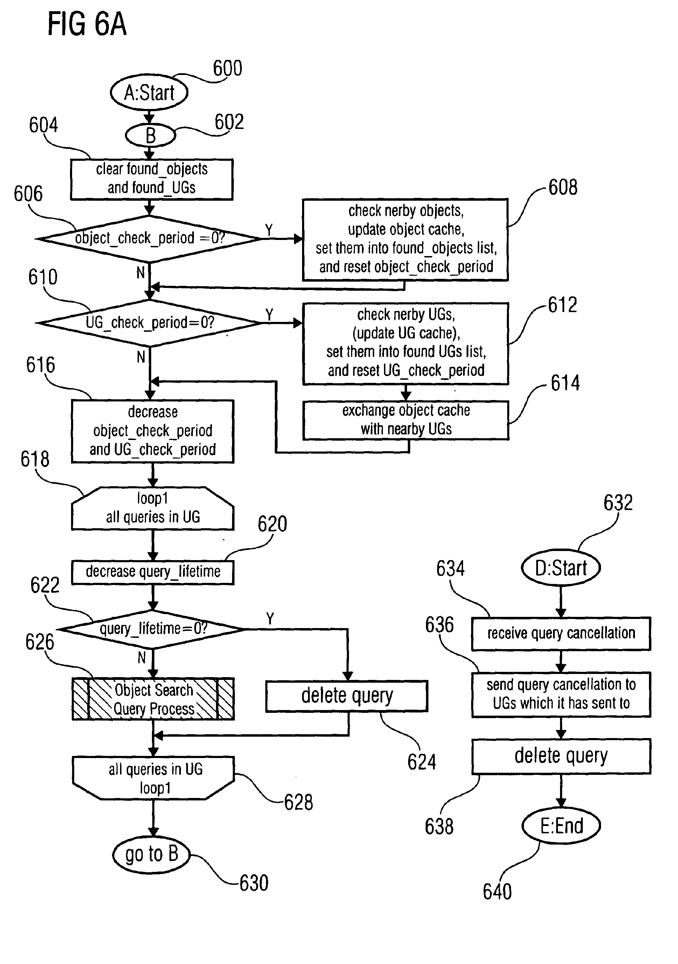

Fig. 6a depicts a flowchart of an embodiment of the process executed at a UG. The process starts at starting point 600 followed by a return point 602. In step 604, the variables found_objects and found_UGs are cleared. According to the above description in step 606, a counter is checked, namely object_check_period, if the counter is 0 in step 608 it is checked for nearby objects, the object cache is updated and the list variable, namely found_list is updated. Moreover, in step 608 the object_check_period is reset. Following step 606, respectively step 608, another counter is checked whether the period for UG checking has expired, namely UG_check_period. If so, in step 612 the nearby UGs are monitored, the UG cache, if present, is updated and a list of found UGs is maintained, namely found_UGs.

Moreover, the UG_check_period is reset. In the following step 614, the object cache may be exchanged with nearby UGs. Following step 610, respectively step 614, the object_check_period and the UG_check_periods are decreased in step 616. Step 616 is followed by a loop which starts in step 618 and ends in step 628. Within the loop in step 620 the query lifetime counter is decreased, followed by a query lifetime check, where the variable query_lifetime is used, in step 622. If the query lifetime has expired in step 624, the query is deleted. If the query_lifetime turns out to be not expired in step 622, the object query search and the query process are carried out in step 626. The query loop ends in step 628, i.e. the loop runs across all installed queries. The process then ends in step 630, where it jumps back to the return point 602. A UG_{EXE} which currently executes the main loop periodically observes objects in its vicinity according to step 608. Moreover, it updates its object cache and stores the found objects in found_objects, which may be implemented as an array. This period is determined by the value object_period, which may be set for example to a period of 1-5 minutes. The UG_{EXE} then periodically observes UGs in its vicinity and stores them into another array, e.g. found_UGs.

If UG_{EXE} has a UG cache, the UG_{EXE} can update it. This period can be counted by the value UG_check_period. During this period, UG_{EXE} also exchanges its object cache and UG cache with neighboring UGs via NFC. In embodiments the UG_{EXE} can reduce NFC traffic by sending only cache differences instead of sending the whole cache. The UG_{EXE} may then execute all file queries according to the loop between steps 618 and 628. The UG_{EXE} checks the lifetime of the query at first in step 620. If it is expired, the UG_{EXE} deletes the query in step 624. If the query is still alive, the UG_{EXE} executes the query process in step 626 and after executing all queries, the UG_{EXE} returns to point "B", i.e., step 602.

On the right-hand side of Fig. 6a, there is another flowchart of an embodiment the process which starts with step 632 or starting point "D". In step 634, the UG receives a query cancellation which is followed by step 636 in which the UG sends a query cancellation to all UGs to which it has sent the query to be cancelled. In steps 638, the UG deletes the query upon which the process ends in step 640 or "E".

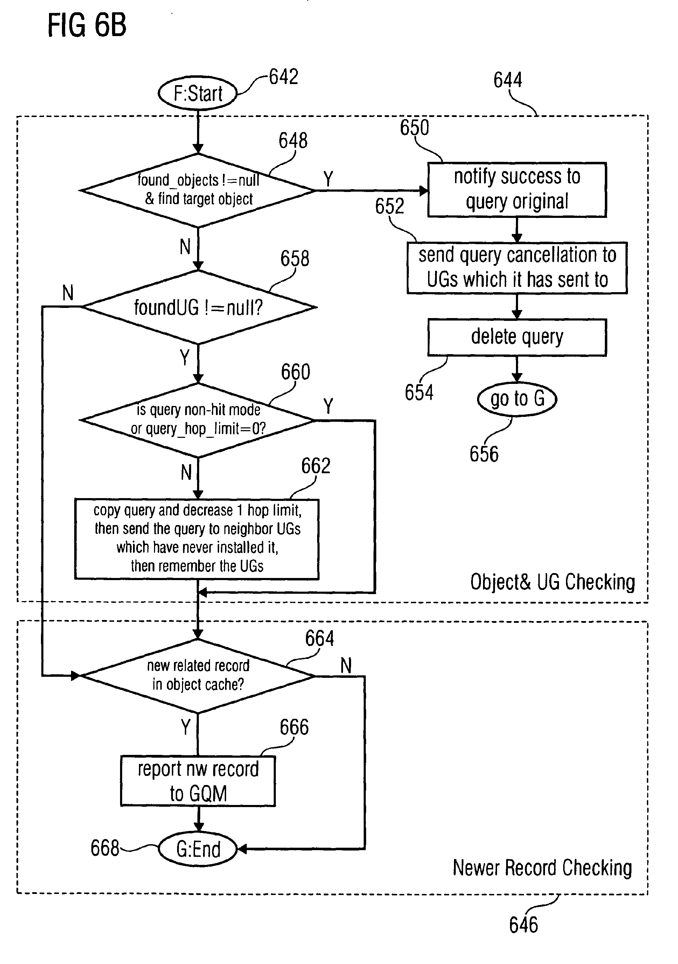

When the UG_{EXE} receives a query, it may execute an algorithm according to the embodiment depicted with the flowchart in Fig. 6b. The basic flow is almost the same as the UG flow described above for the distributed embodiment. The main difference being that when a UG finds a new record, that it sends the record to the GQM, while in the first embodiment the UG selects the next appropriate UG.

The flow depicted in Fig. 6b comprises two phases, of which one is the "Object and UG checking" phase 644 which observes objects or UGs in its vicinity, and the other is the "Newer Record Checking" phase 646, which checks if there is a newer record in the object cache of the UG_{EXE} and sends the record to the GQM.

There are several criteria for the determining of newer records. The simplest criteria is that an information generated time T₁ in a record R₁ is just newer than an information generated time T₂ in another record R₂, which means that R₁ is newer if T₁>T₂. Another criteria is that a record age A₁, which equals the current time minus T₁, is lower than a rate α of another record age A₂, which equals the current time minus T₂, meaning that R₁ is newer if A₁<αA₂, for example, α = ½. In embodiments, another criterion may also be used that is not only time dependent, but also distance dependent. For example, if a generated position of a record R₁ is far away from the generated position of R₂, newness may be compared by T₁>T₂, otherwise compared by A₁<αA₂. In the following examples, the criteria T₁>T₂ will be used.

The flowchart depicted in Fig. 6b starts in step 642 or "F". The "Object and UG Checking" phase 644 is entered and in step 648 it is checked whether the target object was found. If so, in step 650 the query originator is notified of the success, and in step 652, query cancellations are sent to UGs to which the query was forwarded. After this, in step 654, the query can be deleted. If the target object is found, UG_{EXE} notifies success to the GQM and then deletes its own query in step 654. If possible, UG_{EXE} requests query cancellations to other UGs, as to which the UG has sent the query. After the query has been deleted, the process ends in step 652 with a jump to the query end in step 668. If the target object was not found, it is checked in step 658 as to whether UGs have been found at all, or not. If the object is still not found, but neighbor UGs are found, it is checked in step 660 whether a query mode is "not-hit" mode and whether the query_hop_limit = 0, i.e. if the maximum number of query hops is already reached.

If not, in step 662, the query is copied to neighbor UGs and the hop limit is decreased. The queries are sent to neighbor UGs which did not have the query installed before and said UGs are remembered. If in step 660 the query mode is "hit" mode, respectively, the query_hop_limit is already reached, step 662 is skipped, and no queries are copied. If no neighbor UG is found in step 658, the newer record checking phase 646 is immediately ended, as well as following steps 660 and 662. If the query object is not found, but neighbor UGs are, UG_{EXE} copies a query to these UGs if the query is in "hit" mode and the query_hop_limit is more than 1. The query_hop_limit is a variable to count the remaining times that the query can be propagated, and it might be set by the GQM, for example, query_hop_limit=3. If a neighbor UG has already installed this query, UG_{EXE} does not send the query again.

The UG_{EXE} then enters the "New Record Checking" phase 646. In step 664 the UG_{EXE} checks whether the new record of O_{D} is in the object cache. If there is a new record, the UG_{EXE} reports the record to the GQM in step 666. After receiving the record from UG_{EXE}, the GQM reflects it to the object cache in the GQM, according to steps 534 to step 540 in Fig. 5a. The GQM then executes the "Newest Record Tracking" phase 544, and the query installing phase 546 in Fig. 5b.

When the GQM receives success of a search from a UG, each UG_{EXE} is requested to cancel the query from the GQM. If UG_{EXE} has sent the query to other UGs, it requests recursively a query cancellation to those UGs, afterwards it deletes its own query according to steps 632 to 640 in Fig. 6a. According to Fig. 6b, the newer record checking phase 646 is then concluded in step 668, in which the process ends.

As an option for the above described second embodiment, each UG may also have a UG cache. In this case, the GQM may use the UG cache to choose appropriate UGs around the last seen position of the query object. When the GQM chooses UGs around the last seen position, the GQM uses cell information as usual, which may have an accuracy of about 100-500m. Instead of this, the GQM may obtain information from the UG cache from some UGs around the last seen position and get UGs closer to the position. This may make the embodiment more efficient.

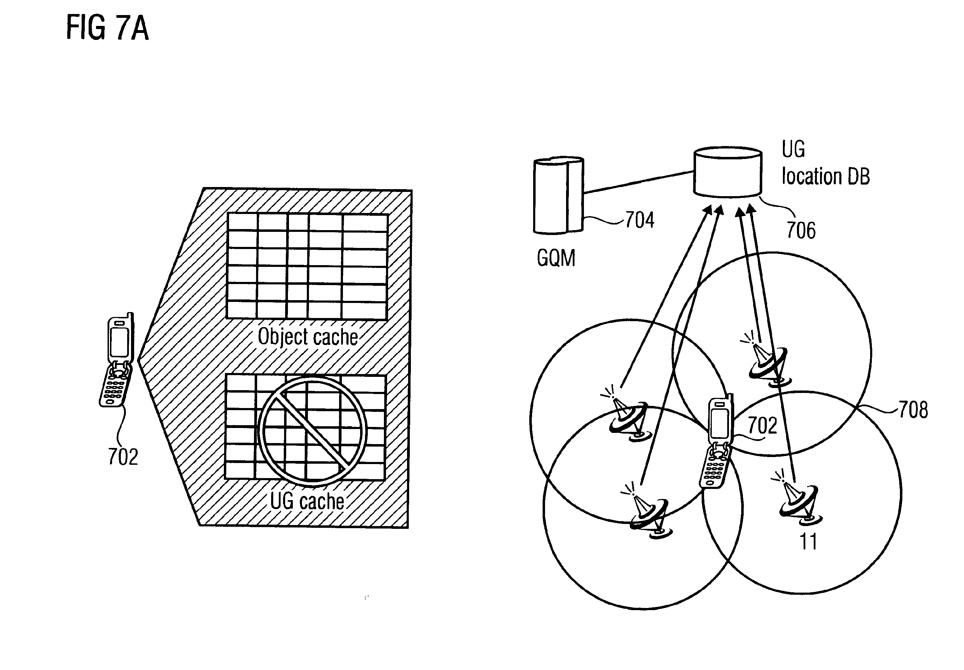

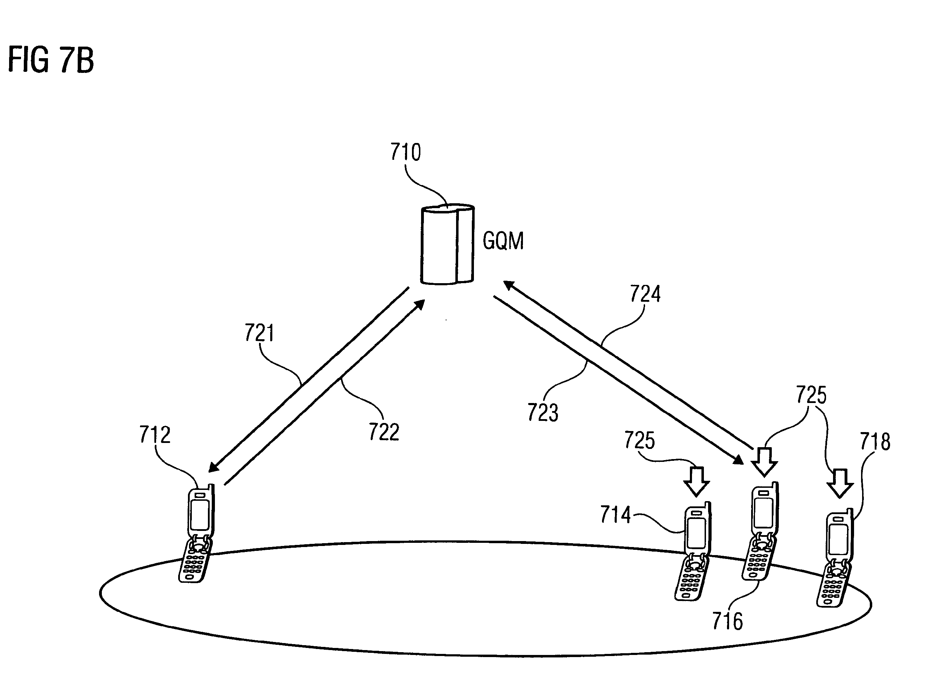

Fig. 7a illustrates the second embodiment. On the left-hand side of Fig. 7 there is an embodiment of a UG 702, wherein the sketch indicates that a UG cache is not required. On the right-hand side of Fig. 7a, there is an embodiment of a GQM 704 which controls the query status. The GQM is connected to a network 706, wherein in Fig. 7a the UG 702 is replicated in the center. The network comprises several cells 708. The GQM 704 knows the UG location calculated from cell information, and the UG 702 accordingly does not have to have a UG cache.

Fig. 7b depicts another embodiment. Fig. 7b shows a GQM 710 and a number of UGs 712, 714, 716 and 718. Each of the UGs has an object cache which contains last seen object information. Using this information, the GQM 710 can reduce the number of queries and reduce the search time compared to a random query installation. For example, in the scenario depicted in Fig. 7b, the GQM 710 could ask the UG 712 whether it has seen object O₁, which is symbolized with the arrow 721. The UG 712 could then report that it has seen O₁ at a position (x₁,y₁) indicated by the arrow 722. From this report, the GQM 710 can conclude on an estimated position of O₁, and therefore choose UG 716 to request whether newer information about an object O₁ is available as indicated by the arrow 723. The arrow 724 then indicates the reply from UG 716 indicating that the object O₁ has been seen, but no newer information is available. The GQM 710 then installs queries intensively around (x₁,y₁) according to the small arrows 725 in Fig. 7b. The UGs 714, 716 and 718 are now actively querying the object O₁.

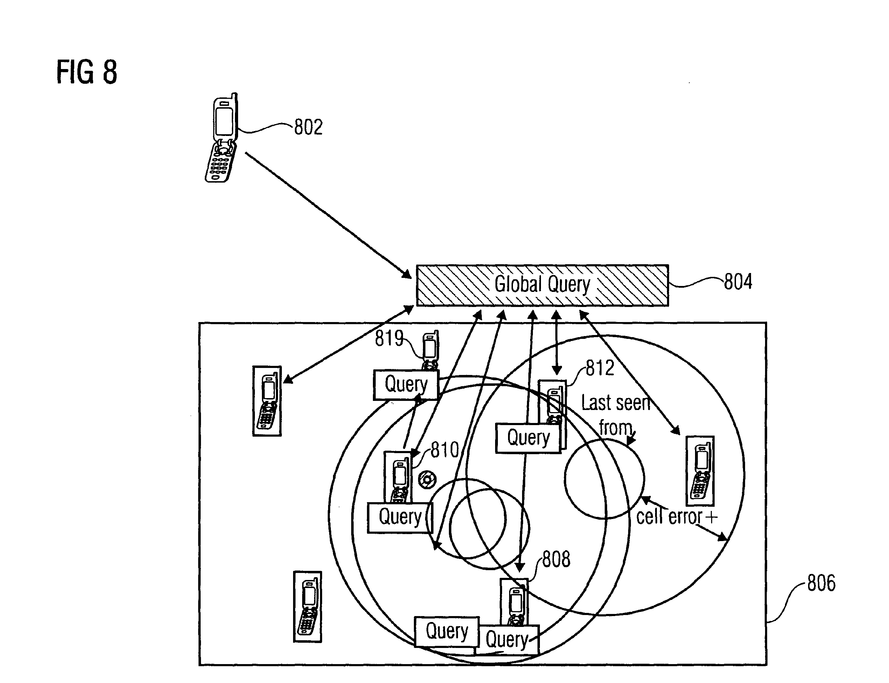

Another embodiment is depicted in Fig. 8. Fig. 8 shows a scenario wherein a UG 802 sends a query, for example, via a 3G mobile communication network to a global query manager 804. The global query manager 804 attempts to obtain a newer record for the queried object from the object cache, and obtains UGs close to the location where the record indicates. These UGs are indicated within the network 806 in Fig. 8. If there is no UG close to the location, UGs get randomly selected. If there is no newer record for the queried object, the GQM installs queries to the UGs close to the location where the latest record indicates. This is indicated by the labels "query" within the network 806 in Fig. 8. In the example depicted, queries are installed at UGs 808, 810, 812, and 814. These UGs may be randomly selected and the GQM 804 may request records for the query object.

Preferably, UGs may be selected at the last seen position and may be requested for newer records. UGs then report the new records and UGs can be recursively selected until no other newer records are found. This is where the query installation can start and known UGs can check for new UGs around the last seen location. The new UGs are requested for newer records, which they report to the GQM 804, and then direct queries can be installed. Every queried UG may broadcast the query via NFC periodically with a decreased hop limit. Eventually, the query object is found.

In the following simulation results for five solutions in a local domain will be presented. The five solutions are: "Simple Query to All", "Simple Query to Random" (solution used by C. Frank, P. Bolliger, F. Mattern and W. Kellerer for local domain); the first embodiment also termed "1^{st} solution", the second embodiment also termed "2^{nd} solution", and LER.

The "Simple Query to Random" solution installed queries at 40% of the UGs in the local domain which is a default setting of the solution in the abovementioned paper. Every solution is simulated under the following default conditions. UGs refer to mobile phones having the capability of global connectivity, as for example third generation mobile communications, and NFC connectivity. The NFC range of a UG is assumed to be 10m, cache exchange frequency via NFCs is 1/60[1/sec]. The sensor range of a UG is 10m, sensing at a frequency of 1/60[1/sec]. The simulated area is 1km by 1km or 1km². The density of the objects is 800objects/km², objects are not moving by default. The UG density is 400nodes/km².

The UG mobility model is random walk. The direction of the UG mobility is randomly chosen, the moving speed is 1m/sec, and the moving period is 100sec. The waiting period after moving is 0sec by default. The UG can determine its own position by GPS with a 10m position error, the GQM can determine the UGs position by cellular information with a 100m position error. The object cache size in a UG is 200, the UG cache size in a UG is also 200. If not noted differently, 100 queries have been issued in each simulated scenario. Each scenario has been simulated several times.

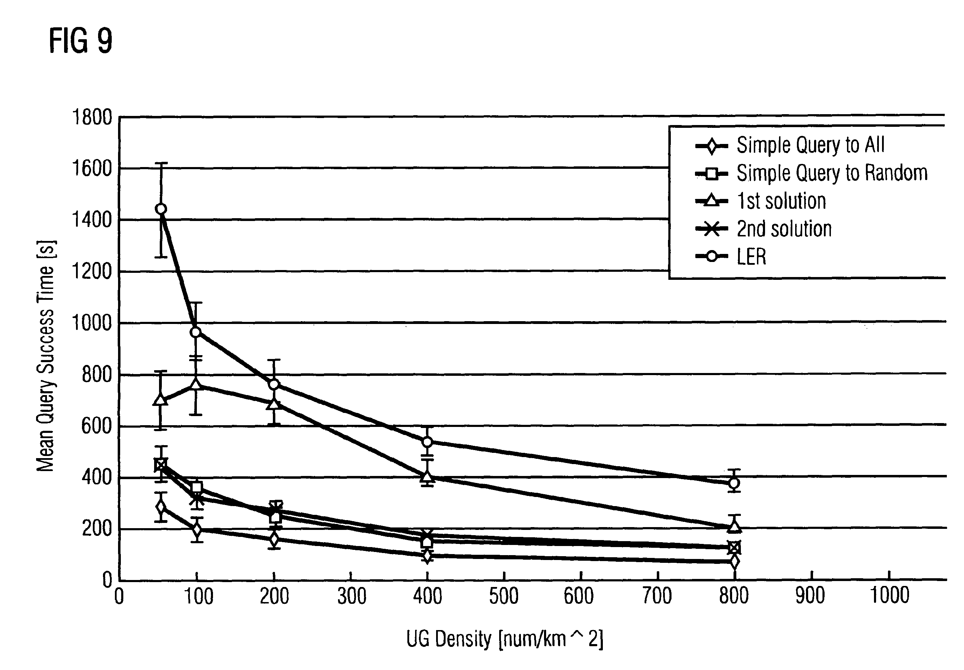

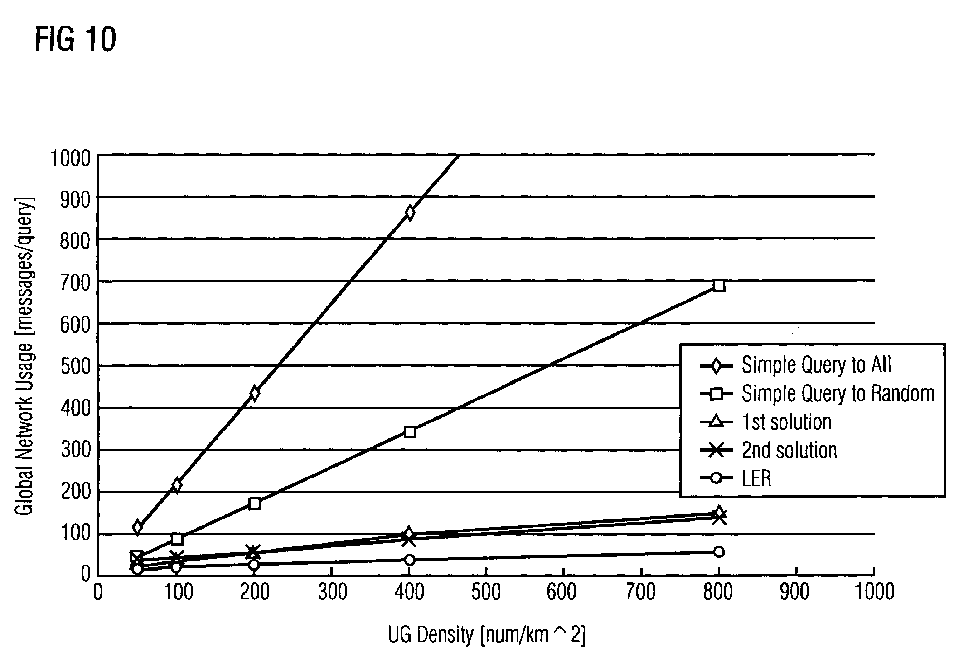

Fig. 9 shows a view graph displaying simulation results of the mean query success time in seconds versus the UG density. Fig. 9 shows the average time it takes for a successful answer of a query over a variation of the UG density of 50 to 800. As a reference, it can be noted that C. Frank, P. Bolliger, F. Mattern and W. Kellerer reported a good operation for the query success when there are around 500 UGs/km². This would lead to an average search time of 6min and 2.5min in the first and second embodiment, respectively. The first and second embodiments are indicated by first and second solution in the legend of Fig. 9. Comparing the solution regarding the average query success time, the order is "Simple Query to All" < "Simple Query to Random" < second solution < first solution < LER. However, "Simple Query to All" and "Simple Query to Random" lead to a higher network load as it is displayed in Fig. 10. With respect to Fig. 9, it can be seen that the second embodiment can achieve almost the same success time as "Simple Query to Random", with a much lower load on the global network compared to the other solutions.

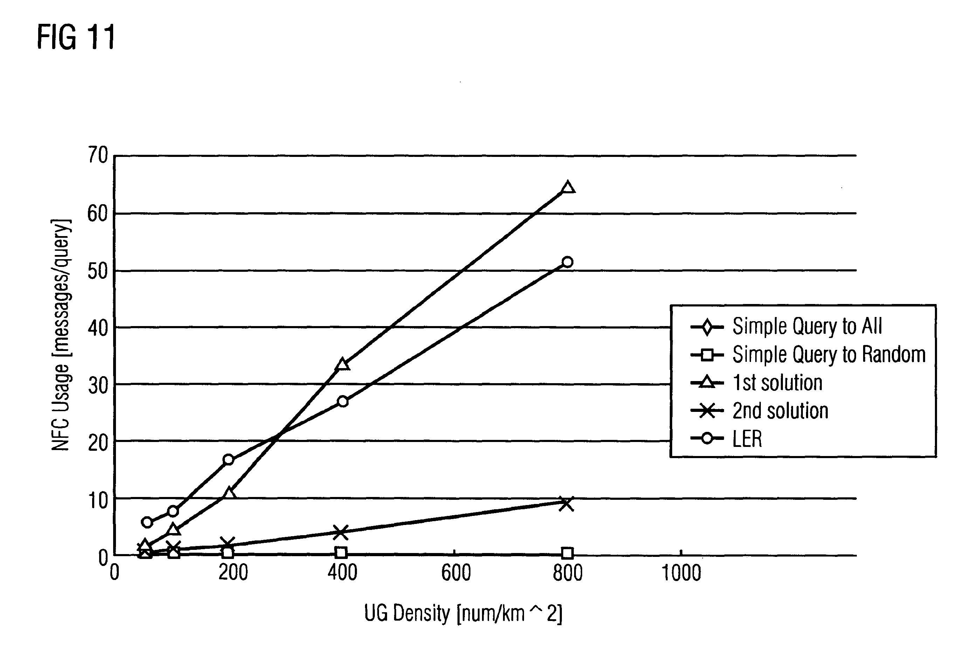

Figs. 10 and 11 show the network load imposed on the global network and the NFC. Fig. 10 shows the global network usage, and Fig. 11 shows the NFC usage, both versus the UG density. As can be seen from Fig. 10, when comparing the solutions regarding the network load of the global network, the order is LER as the lowest, then the second embodiment, the first embodiment, then "Simple Query to Random" and lastly, "Simple Query to All". Thus, the first and the second embodiments save a great deal of global network load and can still keep short average success times. LER does not use the global network so much, but is has a much longer query success time as has been indicated in Fig. 9.

As can be seen from Fig. 11, LER and the first embodiment utilize the highest NFC usage. The second embodiment takes advantage of the second means for communicating, respectively, the NFC, in order the reduce the load on the global network. NFC is used in the first and second embodiments for communicating between mobile devices, respectively, UGs. "Simple Query to All" and "Simple Query to Random" do not use the NFC at all. Fig. 11 only shows the NFC forwarded messages to support a query directly, but it does not show the periodically exchanged messages.

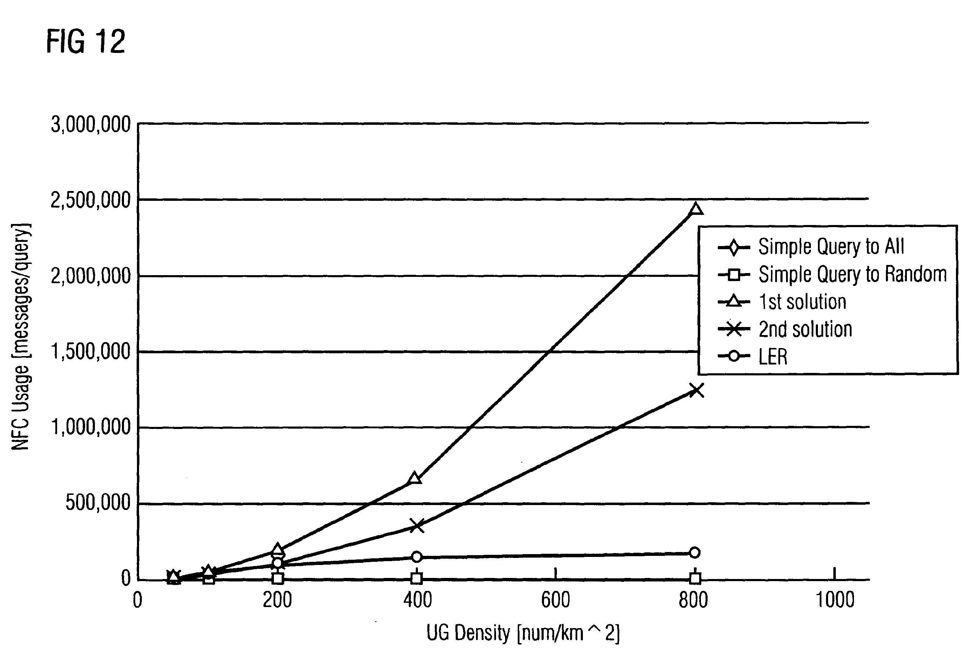

Fig. 12 shows the NFC usage versus the UG density. The average system query frequency is 1000 queries per hour. Here, the periodically exchanged messages, i.e., from the caches and search messages are included. The portion of the periodically exchanged messages per hour is constant, i.e. 60 times per hour per UG, which is calculated by 3600s/60s exchanging period.

In some embodiments, it can be assumed that the NFC cost is cheaper than the global network cost. This can, for example, be the case if the cost is based on battery power consumption as a cost metric. The average power consumption of NFC, which may, for example, be between 10mW and 50mW can be orders of magnitudes lower than in the global cellular network, where a typical value is for example 1W. Additionally, NFC is free to use for a user.

From this perspective, especially the second embodiment or the second solution is very useful in reducing the global network load and to obtain a good success in a short period of time. The first embodiment or first solution is relatively not as good, but still available, as it does not involve any central server, so everyone could deploy it. Therefore the first and second embodiments may be advantages in different scenarios.

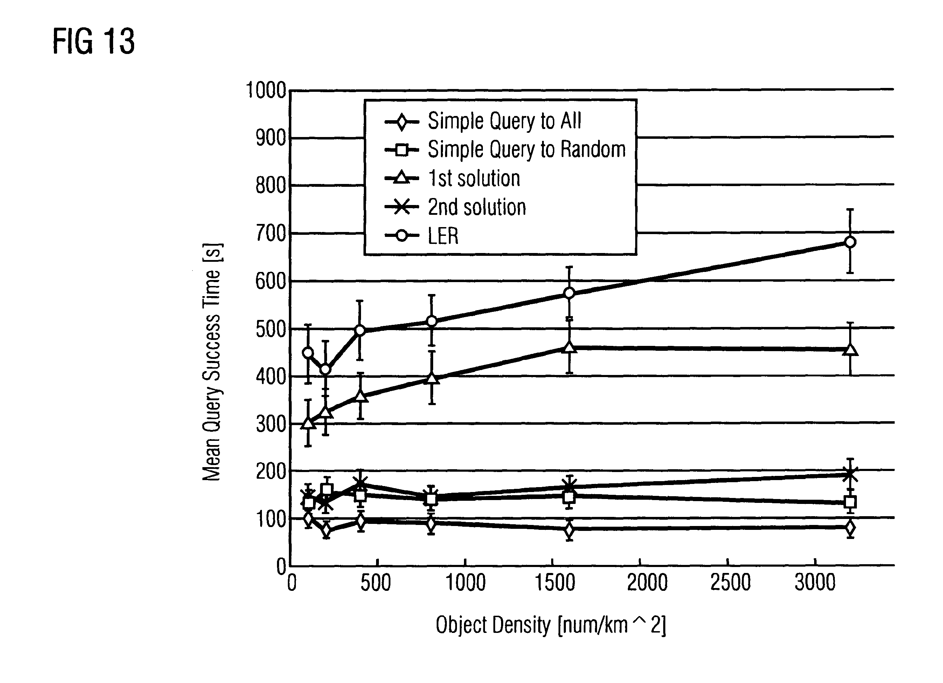

Fig. 13 shows the mean query success time versus the object density. The object density is varied from 100-3200. Fig. 13 shows that the expected average query success time of the first and second solutions, respectively embodiments, increase with the object density. This is caused by the limitation of the object cache at a UG. For further improving the embodiments, this bottleneck can be avoided by dynamically changing the object cache size depending on the number of observed objects.

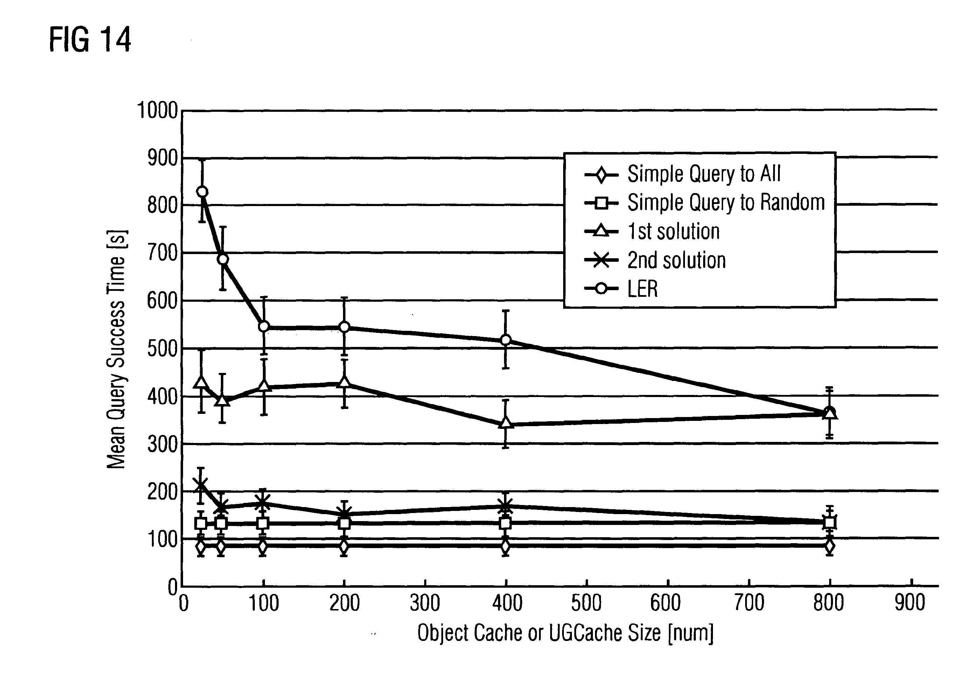

Fig. 14 shows the mean query success time versus the object cache size at a UG, wherein the object cache size is varied from 25-800. From Fig. 14, it can be observed that the object cache size may not improve the query success time after a certain value has been set. In Fig. 14, for example, a cache size of 200 is sufficient for a scenario with 400UGs/km² and 800objects/km².

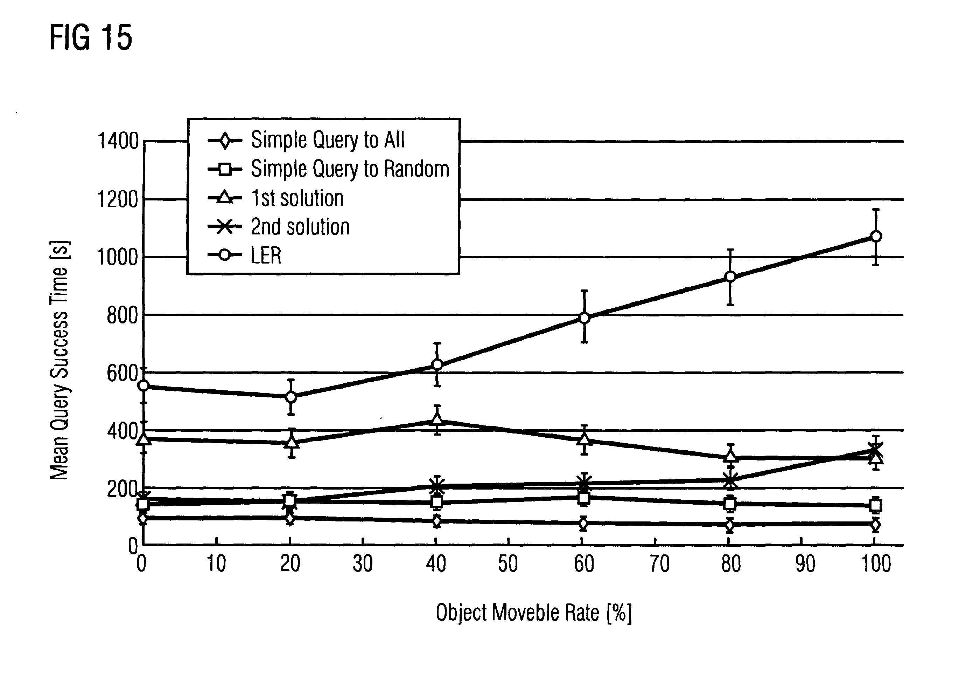

Fig. 15 shows simulation results to the mean query success time versus the object movable rate in percent. The average query success time for moving objects has been evaluated. In the simulations, objects move with random walk, which means that every UG determines a random angle, fixed speed, fixed walking period, and no waiting period after waking. In the simulations, of which results are indicated in Fig. 15, the speed was set to 1m/s, the walking period was set to 100s and the waiting period was set to 0s. Fig. 15 shows the results by varying the rate of mobile respectively moving objects between 0-100%. Under such a hard condition, the first and the second embodiments still get a much shorter success time and less global network usage than LER. And both embodiments are very stable, even when objects are moving.

There are basically two factors affecting the performance of the first and second solutions, respectively, embodiments. One is the observation that the timeliness of the object cache becomes worse if too many objects are moving. The other is the observation that UGs can cache object records of new objects more quickly as many objects are moving. The first embodiment can balance both factors with the simulation parameter settings used for the presented simulation. For the second embodiment, the first factor was stronger than the second factor for the simulation parameter setting used.

From the above simulation results, the embodiments are much better than LER. The second embodiment achieves almost the same success time as "Simple Query to Random" with a lower global network load.

It should be noted that the simulation results presented herein have been carried out under rather conservative simulation assumptions. For example the simulations presented here were done with a low UG density, i.e. 400 UGs/km², while in real world scenarios higher UG densities occur, as for example, presented by C. Frank, P. Bolliger, F. Mattern and W. Kellerer. Further, a random walk is a kind of a worst case walking model. In the real world, some UGs are stable or do not often move, and the walkways are restricted by a road, for example. Thus, even better results can be expected in the real world for embodiments of the present invention, for example.

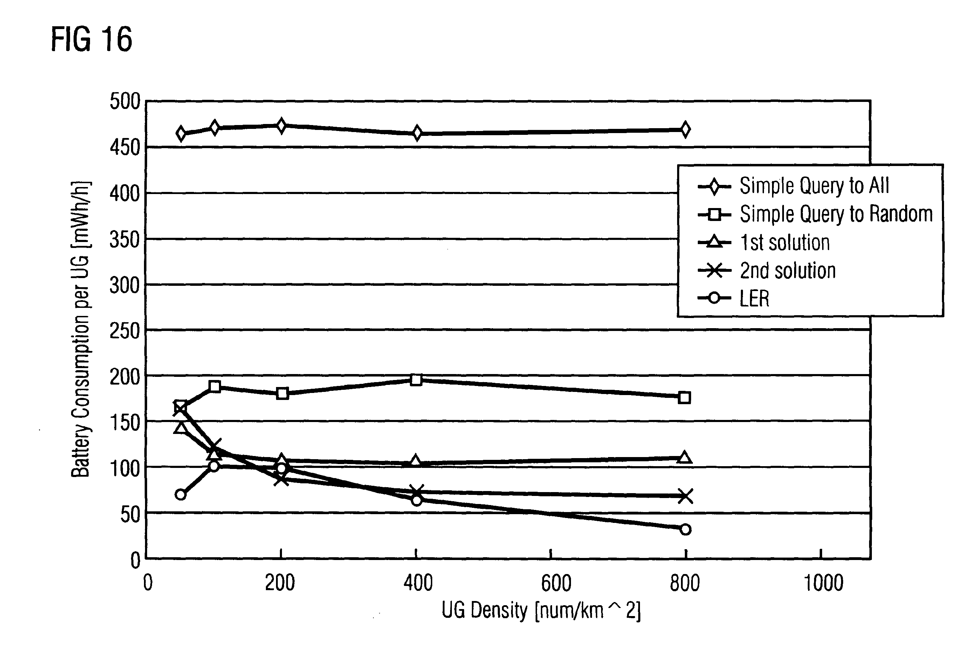

Fig. 16 displays simulation results for the battery consumption versus the UG density. The battery consumption is evaluated by a metric which is 60mW/s for an NFC network message and 800mW/s for a global network message. In the simulation results displayed in Fig. 16, it was further assumed that 1000 queries occur per hour. From Fig. 16 it can be seen that the first and second embodiments, respectively, the first and second solution, outperforms "Simple Query to All" and "Simple Query to Random". Under these conditions, the second embodiment achieves battery consumption almost as low as LER. With the first embodiment, the battery consumption are slightly higher than for the second embodiment.

The above simulation results have shown that the first and second embodiments can reduce the success time, as well as the network costs. Therefore, embodiments of the present invention can provide the advantage that battery life can be extended in UGs when querying for an object.

In another embodiment, a UG may change between the first and the second embodiment. That is, a UG may start a distributed query according to the first embodiment if the remaining battery life is rather low, and use the second embodiment involving the global querying manager if longer battery life is available. Moreover, objects may also comprise real world information such as persons, services provided by mobile devices, identifies such as IP addresses in mobile ad hoc networks, etc. Therefore, embodiments may also participate in information sharing systems, wherein information can dynamically be shared.

Depending on certain implementation requirements of the inventive methods, the inventive methods can be implemented in hardware or in software. The implementation can be performed using a digital storage medium, in particular, a flash memory, a disc, a CD or a DVD having an electronically readable control signals stored thereon, which cooperate with a programmable computer system, such that the inventive methods are performed. Generally, the present invention is, therefore, a computer program product with a program code stored on a machine-readable carrier, the program code being operative for performing the inventive methods when the computer program product runs on a computer. In other words, the inventive methods are therefore, a computer program having a program code for performing at least one of the inventive methods when the computer program runs on a computer.

### List of Reference Signs

- 100: Ubiquitous Gateway
- 110: First means for communicating
- 120: Second means for communicating
- 130: Object cache
- 140: Controller
- 150: Ubiquitous Gateway cache
- 160: Global Query Manager
- 170: Means for communicating
- 180: Object cache
- 190: Controller

- 302: Start point
- 304: Return point
- 306: Clearance
- 308: Check of object period
- 310: Check nearby object
- 312: Check UG period
- 314: Check nearby UGs
- 316: Exchange cache
- 318: Decrease counter

- 320: Start of loop
- 322: Decrease query lifetime
- 324: Check lifetime
- 326: Check query origin
- 328: Show results to user

- 330: Delete query
- 332: Object search, query process
- 334: End of loop
- 336: Jump to return point
- 338: Starting point

- 340: Receive query success
- 342: Show result to user
- 344: Send query cancellation to UG
- 346: Delete query
- 348: End

- 350: Starting point
- 352: Receive query cancellation

- 360: Object and UG checking phase
- 362: Newer record checking phase
- 364: Starting point
- 366: Check found objects
- 368: Notify success to query originator

- 370: Send query cancellation
- 372: Delete query
- 374: Jump to end
- 376: Check neighbor UG
- 378: Check broadcast limit

- 380: Copy queries
- 382: Check for new records
- 384: Get estimated location
- 386: Get UG
- 388: Check whether query is already installed

- 390: Copy query
- 392: Check for first execution
- 394: Select Random UG
- 398: End

- 405: Ubiquitous Gateway
- 410: Ubiquitous Gateway
- 415: Ubiquitous Gateway

- 425: Object cache
- 430: Object cache
- 435: Object cache

- 502: Starting point
- 504: Return point
- 506: Start of loop
- 508: Decrease query lifetime

- 510: Check lifetime
- 512: Show result to user
- 514: Delete query
- 516: End of loop
- 518: Object search, query process

- 520: Return to return point
- 522: Starting point
- 524: Receive query success or cancellation
- 526: Show result to user
- 528: Send query cancellation

- 530: Delete Query
- 532: end
- 534: Start
- 536: Receive new record
- 538: Add record to GQM cache

- 540: End
- 542: Random Sampling phase
- 544: Newest Record Tracking phase
- 546: Query installing phase
- 548: Starting point

- 550: Try to get record on target object
- 552: Check record

- 554: Check sample limit
- 556: Select UG randomly
- 558: Checking for newer record

- 560: Check for random sample limit
- 562: Send query to UG
- 564: End
- 566: Check for newer record
- 568: Store new record
- 570: Select non-installed UG
- 572: Start of loop
- 574: Check sample limit
- 576: Try to get record
- 578: Check new record
- 580: End of loop
- 582: Jump to end
- 584: Store the record
- 586: Jump to end
- 588: Check last selected UG
- 590: Select non-installed UG
- 592: Select UG
- 594: Mark UG
- 596: Clear last selected UG

- 600: Start
- 602: Return point
- 604: Clear found object
- 606: Check for object check period
- 608: Check nearby objects
- 610: Check for UG check period
- 612: Check for nearby UGs
- 614: Exchange object cache with nearby UG
- 616: Decrease counters
- 618: Start of loop
- 620: Decrease lifetime

- 622: Check lifetime
- 624: Delete query
- 626: Object search, query process
- 628: End of loop
- 630: Go to return point
- 632: Starting point
- 634: Receive query cancellation
- 636: Send query cancellation
- 638: Delete query
- 640: End
- 624: Start
- 644: Object and checking phase
- 646: Newer record checking phase
- 648: Check found objects
- 650: Notify success to originator
- 652: Send query cancellation
- 654: Delete query
- 656: Go to end
- 658: Check found UGs
- 660: Check hop limit
- 662: Copy query
- 664: Check for new record
- 666: Report new record
- 668: End

- 702: Ubiquitous Gateway
- 704: GQM
- 706: Mobile Communication Network
- 708: Cells of Mobile Communication Network
- 710: GQM
- 712: Ubiquitous Gateway
- 714: Ubiquitous Gateway
- 716: Ubiquitous Gateway
- 718: Ubiquitous Gateway
- 721: Do you know object O₁?

- 722: I know object O₁ was at location x₁, y₁
- 723: Do you know newer information about object O₁
- 724: I know, but not new information
- 725: GQM installs queries intensively around x₁, y₁

- 802: Ubiquitous Gateway
- 804: GQM
- 806: Mobile Communication Network
- 808: Query UG
- 810: Query UG
- 812: Query UG
- 814: Query UG

## Claims

1. A Ubiquitous Gateway (100) for communicating in a mobile communication network, the mobile communication network comprising a plurality of Ubiquitous Gateways, comprising:
a first means (110) for communicating with the mobile communication network;
a second means (120) for communicating with other Ubiquitous Gateways and for communicating with an object, an object having an object identification, wherein the second means (120) for communicating is adapted for detecting an object record received from a Ubiquitous Gateway or an object;
an object cache (130) for temporarily storing an object record comprising an object record identification, an object identification and an object location; and
a controller (140) for repetitively monitoring objects through the second means (120) for communicating,
wherein the controller (140) is adapted for storing an object record of monitored objects in the object cache (130),
wherein the controller (140) is adapted for repetitively exchanging an object record from the object cache (130) with other Ubiquitous Gateways,
wherein the controller (140) is further adapted for receiving an object query on a query object from a query origin and
wherein the controller (140) is adapted for reporting an object record on the query object from the object cache (130) to the query origin.

2. The Ubiquitous Gateway (100) of claim 1 further comprising a Ubiquitous Gateway cache (150) for temporarily storing a Ubiquitous Gateway record comprising a Ubiquitous Gateway record identification, a Ubiquitous Gateway identification and a Ubiquitous Gateway location and wherein the controller (140) is adapted for repetitively monitoring other Ubiquitous Gateways through the second means (120) for communicating and for storing a Ubiquitous Gateway record in the Ubiquitous Gateway cache (150) and for repetitively exchanging a Ubiquitous Gateway record from the Ubiquitous Gateway cache (150) through the second means for communicating (120) with other Ubiquitous Gateways and for forwarding the object query to a Ubiquitous Gateway based on a Ubiquitous Gateway record from the Ubiquitous Gateway cache (150).

3. The Ubiquitous Gateway (100) of one of the claims 1 or 2, wherein the object record further comprises one of or a combination of the group of a time stamp of the object last seen time, a Ubiquitous Gateway identification of a Ubiquitous Gateway having monitored the object, a period during which the object has continuously been monitored by a Ubiquitous Gateway, an estimated last seen position, whether the object is movable or not movable, a history of Ubiquitous Gateways that have exchanged the object record or a number of hops the object record has propagated.

4. The Ubiquitous Gateway (100) of one of the claims 2 or 3, wherein the Ubiquitous Gateway record further comprises one of or a combination of the group of a time stamp of when the Ubiquitous Gateway was last monitored, and an estimated last seen position of the Ubiquitous Gateway, an average speed of the Ubiquitous Gateway, a standard deviation of the Ubiquitous Gateway speed, a history of Ubiquitous Gateways having forwarded the Ubiquitous Gateway record or a number of hops the Ubiquitous Gateway record has propagated.

5. The Ubiquitous Gateway (100) of one of the claims 1-4, wherein the controller (140) is adapted for updating an object record in the object cache (130) or a Ubiquitous Gateway record in the Ubiquitous Gateway cache (150) when an object record or a Ubiquitous Gateway record is received from another Ubiquitous Gateway.

6. The Ubiquitous Gateway (100) of one of the claims 1-5, wherein the controller (140) is adapted for discarding an older object record if a newer object record is available.

7. The Ubiquitous Gateway (100) of one of the claims 1-6, wherein the controller (140) is adapted for discarding an older Ubiquitous Gateway record if a newer Ubiquitous Gateway record is available.

8. The Ubiquitous Gateway (100) of one of the claims 1-7, wherein the controller (140) is adapted for monitoring objects in a vicinity periodically and for updating an object record in the object cache (130) if a new object record becomes available.

9. The Ubiquitous Gateway (100) of claim 8, wherein the period is between 10 sec to 5 minutes.

10. The Ubiquitous Gateway (100) of one of the claims 2-9, wherein the controller (140) is adapted for monitoring Ubiquitous Gateways in a vicinity periodically, and for updating a Ubiquitous Gateway record in the Ubiquitous Gateway cache (150) when a newer Ubiquitous Gateway record becomes available.

11. The Ubiquitous Gateway (100) of one of the claims 1-10, wherein the controller (140) is adapted for periodically exchanging an update object record or an update Ubiquitous Gateway record with Ubiquitous Gateways in a vicinity.

12. The Ubiquitous Gateway (100) of one of the claims 7-11, wherein the vicinity is determined by a coverage of the second means for communicating (120).

13. The Ubiquitous Gateway (100) of one of the claims 1-12, wherein the controller (140) is adapted for considering a lifetime of an object query and for discarding an object query when a lifetime has expired.

14. The Ubiquitous Gateway (100) of claim 13, wherein the controller (140) is adapted for responding to an object query before the lifetime expires with an update object record on the query object to the query origin.

15. The Ubiquitous Gateway (100) of one of the claims 13 or 14, wherein the controller (140) is adapted for storing Ubiquitous Gateway identifications of Ubiquitous Gateways to which an object query has been forwarded and requesting cancellation of the object query to all Ubiquitous Gateways to which the object query was forwarded when the query object is found or the object query is cancelled.

16. The Ubiquitous Gateway (100) of one of the claims 1-15, wherein the controller (140) is adapted for establishing a limit on how many times an object query can be forwarded.

17. The Ubiquitous Gateway (100) of one of the claims 1-16, further comprising a means for determining its own position.

18. The Ubiquitous Gateway (100) of claim 17, wherein the means for determining its own position comprises a GPS-receiver (GPS = Global Positioning System).

19. The Ubiquitous Gateway (100) of one of the claims 1-18, further comprising a Bloom filter being prepared with object records and Ubiquitous Gateway records.

20. The Ubiquitous Gateway (100) of one of the claims 1-19, wherein the first means for communicating (110) is adapted for communicating in a cellular mobile communication network.

21. The Ubiquitous Gateway (100) of claim 20, wherein the first means for communicating (110) is adapted for communicating according to one of or a combination of the group of GSM (GSM = Global System for Mobile Communications), UMTS (UMTS = Universal Mobile Telecommunication System), LTE (LTE = Long Term Evolution) or FOMA (FOMA = Freedom of Mobile Multimedia Access).

22. The Ubiquitous Gateway (100) of one of the claims 1-21, wherein the second means for communicating (120) is adapted for communicating according to one of or a combination of the group of DECT (DECT = Digital Enhanced Cordless Telephone), Bluetooth, RFID (RFID = Radio Frequency Identification), ISM (ISM = Industrial, Scientific and Medical radio bands), or WLAN (WLAN = Wireless Local Area Network).

23. The Ubiquitous Gateway (100) of one of the claims 1-22, wherein the controller (140) is further adapted for receiving and installing a search query for the query object, the controller (140) being further adapted to proactively search for the query object as a response to a received and installed search query, or wherein the controller (140) is adapted for broadcasting the search query through the second means (120) for communicating.

24. The Ubiquitous Gateway (100) of one of the claims 1-23, wherein the means (110) for communicating with the mobile communication network is adapted for communicating using a communication protocol, wherein the communication protocol is such that the query object can not communicate using the communication protocol.

25. A method for communicating in a mobile communication network, the mobile communication network comprising a plurality of Ubiquitous Gateways, comprising the steps of:
communicating with the mobile communication network;
communicating with Ubiquitous Gateways;
communicating with an object, an object having an object identification;
temporarily storing an object record comprising an object record identification, an object identification and an object location;
monitoring objects;
storing object records of monitored objects;
repetitively exchanging object records with Ubiquitous Gateways;
receiving an object query on a query object from a query origin; and
reporting on an object record on the query object to the query origin.

26. Computer program having a program code for performing the method of claim 25, when the program runs on a processor.

27. A global query manager (160) for operating in a mobile communication network comprising a plurality of Ubiquitous Gateways, Ubiquitous Gateways being mobile and adapted for communicating in a mobile communication network and for storing object records, comprising:
a means (170) for communicating with the plurality of Ubiquitous Gateways and adapted for detecting an object record received from a Ubiquitous Gateway;
an object cache (180) for temporarily storing an object record reported by a Ubiquitous Gateway, the object record comprising an object record identification, an object identification and an object location; and
a controller (190) for receiving a record request for a query object from a query origin and for forwarding the record request to a query Ubiquitous Gateway,
wherein the controller (190) is adapted for accessing the object record and for selecting the query Ubiquitous Gateway from the plurality of Ubiquitous Gateways based on the query object record temporarily stored in the object cache (180) if available or randomly otherwise.

28. The global query manager (160) of claim 27, wherein the controller (190) is adapted for further storing a Ubiquitous Gateway identification of a Ubiquitous Gateway which has reported an object record.

29. The global query manager (160) of claim 28, wherein the controller (190) is adapted for selecting the query Ubiquitous Gateway based on the Ubiquitous Gateway which has reported the object record on the query object.

30. The global query manager (160) of one of the claims 27-29, wherein the controller (190) is adapted for selecting the query Ubiquitous Gateway based on a query object location stored in the object cache (180) and on the query Ubiquitous Gateway location.

31. The global query manager (160) of one of the claims 27-30, wherein the object record further comprises one of or a combination of the group of a time stamp of the object last seen time, a Ubiquitous Gateway identification of a Ubiquitous Gateway having monitored the object, a period during which the object has continuously been monitored by a Ubiquitous Gateway, an estimated last seen position, whether the object is movable or not movable, a history of Ubiquitous Gateways that have exchanged the object record or a number of hops the object record has propagated.

32. The global query manager (160) of one of the claims 27-31, wherein the controller (190) is adapted for installing a search query for the query object at the query Ubiquitous Gateway, the query Ubiquitous Gateway using near field communication to forward the search query to another Ubiquitous Gateway and for querying the query object proactively.

33. The global query manager (160) of one of the claims 27-32, wherein the controller (190) is adapted for receiving an object record based on a forwarding of a search query from the query Ubiquitous Gateway to another Ubiquitous Gateway, the other Ubiquitous Gateway also forwarding the search query.

34. The global query manager (160) of one of the claims 27-33, wherein the controller (190) is adapted for associating a lifetime with a record request and for notifying the query origin when the lifetime of the record request has expired.

35. The global query manager (160) of one of the claims 27-34, wherein the controller (190) is adapted for forwarding the record request to query Ubiquitous Gateways, which are likely to have newer object records on the query object than the object record from the object cache (180).

36. The global query manager (160) of one of the claims 27-35, wherein the controller (190) is adapted for forwarding the record request to Ubiquitous Gateways being located in a vicinity of a query object location, the vicinity being determined by the mobile communication network or from the object cache (180).

37. The global query manager (160) of one of the claims 27-36, wherein the controller (190) is adapted for forwarding the record request to a predetermined number of query Ubiquitous Gateways.

38. The global query manager (160) of one of the claims 32-37, wherein the controller (190) is adapted for installing the search query to a predetermined number of Ubiquitous Gateways.

39. The global query manager (160) of one of the claims 27-38, wherein the controller (190) is adapted for providing a newest search object location to the query origin.

40. The global query manager (160) of one of the claims 27-39, wherein the controller (190) is adapted for receiving the record request from a Ubiquitous Gateway or a network node from the mobile communication network.

41. The global query manager (160) of one of the claims 27-40, wherein the means (170) for communicating is adapted for communicating using a communication protocol, wherein the communication protocol is such that the query object can not communicate using the communication protocol.

42. A method for managing a query in a mobile communication network, comprising a plurality of Ubiquitous Gateways, a Ubiquitous Gateway being mobile and adapted for communicating in the mobile communication network and for storing an object record, comprising the steps of:
communicating with the plurality of Ubiquitous Gateways;
temporarily storing an object record reported by a Ubiquitous Gateway, an object record comprising an object record identification, an object identification and an object location;
receiving a record request for a query object from a query origin;
forwarding the record request to a query Ubiquitous Gateway, the query Ubiquitous Gateway being selected from the plurality of Ubiquitous Gateways based on the object record of the query object if available or randomly otherwise; and
reporting the object record on the query object to the query origin.

43. Computer program having a program for performing the method of claim 42, when the computer program runs on a processor.

44. System comprising a Ubiquitous Gateway (100) according to one of the claims 1-24 and a global query manager (160) according to one of the claims 27-41.

## Amended claims

### Amended claims in accordance with Rule 137(2) EPC.

**1.** A Ubiquitous Gateway (100) for communicating in a mobile communication network, the mobile communication network comprising a plurality of Ubiquitous Gateways, comprising:
first means (110) for communicating with the mobile communication network;
second means (120) for communicating with an other Ubiquitous Gateway and for communicating with an object, the object having an object identification, wherein the second means (120) for communicating is adapted for detecting an object record received from the other Ubiquitous Gateway or the object;
an object cache (130) for temporarily storing the object record comprising an object record identification, the object identification and an object location; and
a controller (140) for repetitively monitoring the object through the second means (120) for communicating,
wherein the controller (140) is adapted for storing the object record of the object in the object cache (130),
wherein the controller (140) is adapted for repetitively receiving the object record from the other Ubiquitous Gateway and for repetitively sending the object record from the object cache (130) to the other Ubiquitous Gateway,
wherein the controller (140) is further adapted for receiving an object query on the object from a query origin and
wherein the controller (140) is adapted for reporting the object record on the object from the object cache (130) to the query origin.

**2.** The Ubiquitous Gateway (100) of claim 1 further comprising a Ubiquitous Gateway cache (150) for temporarily storing a Ubiquitous Gateway record comprising a Ubiquitous Gateway record identification, a Ubiquitous Gateway identification and a Ubiquitous Gateway location and wherein the controller (140) is adapted for repetitively monitoring the other Ubiquitous Gateway through the second means (120) for communicating and for storing the Ubiquitous Gateway record in the Ubiquitous Gateway cache (150) and for repetitively exchanging the Ubiquitous Gateway record from the Ubiquitous Gateway cache (150) through the second means for communicating (120) with a further Ubiquitous Gateway and for forwarding the object query to the further Ubiquitous Gateway based on the Ubiquitous Gateway record from the Ubiquitous Gateway cache (150).

**3.** The Ubiquitous Gateway (100) of one of the claims 1 or 2,
wherein the object record further comprises one of or a combination of the group of a time stamp of the object last seen time, a Ubiquitous Gateway identification of a Ubiquitous Gateway having monitored the object, a period during which the object has continuously been monitored by the Ubiquitous Gateway, an estimated last seen position, whether the object is movable or not movable, a history of Ubiquitous Gateways that have exchanged the object record or a number of hops the object record has propagated.

**4.** The Ubiquitous Gateway (100) of one of the claims 2 or 3,
wherein the Ubiquitous Gateway record further comprises one of or a combination of the group of a time stamp of when the other Ubiquitous Gateway was last monitored, and an estimated last seen position of the other Ubiquitous Gateway, an average speed of the other Ubiquitous Gateway, a standard deviation of the other Ubiquitous Gateway speed, a history of further Ubiquitous Gateways having forwarded the Ubiquitous Gateway record or a number of hops the Ubiquitous Gateway record has propagated.

**5.** The Ubiquitous Gateway (100) of one of the claims 1 to 4,
wherein the controller (140) is adapted for updating the object record in the object cache (130) or a Ubiquitous Gateway record in the Ubiquitous Gateway cache (150) when an other object record or a Ubiquitous Gateway record is received from the other Ubiquitous Gateway.

**6.** The Ubiquitous Gateway (100) of one of the claims 1 to 5,
wherein the controller (140) is adapted for discarding an older object record if a newer object record is available.

**7.** The Ubiquitous Gateway (100) of one of the claims 1 to 6,
wherein the controller (140) is adapted for discarding an older Ubiquitous Gateway record if a newer Ubiquitous Gateway record is available.

**8.** The Ubiquitous Gateway (100) of one of the claims 1 to 7,
wherein the controller (140) is adapted for monitoring further objects in a vicinity periodically and for updating a further object record in the object cache (130) if a new object record becomes available.

**9.** The Ubiquitous Gateway (100) of claim 8, wherein the period is between 10 sec to 5 minutes.

**10.** The Ubiquitous Gateway (100) of one of the claims 2 to 9,
wherein the controller (140) is adapted for monitoring further Ubiquitous Gateways in a vicinity periodically, and for updating a further Ubiquitous Gateway record in the Ubiquitous Gateway cache (150) when a newer Ubiquitous Gateway record becomes available.

**11.** The Ubiquitous Gateway (100) of one of the claims 1 to 10,
wherein the controller (140) is adapted for periodically exchanging an update object record or an update Ubiquitous Gateway record with further Ubiquitous Gateways in a vicinity.

**12.** The Ubiquitous Gateway (100) of one of the claims 7 to 11,
wherein the vicinity is determined by a coverage of the second means for communicating (120).

**13.** The Ubiquitous Gateway (100) of one of the claims 1 to 12,
wherein the controller (140) is adapted for considering a lifetime of the object query and for discarding the object query when the lifetime has expired.

**14.** The Ubiquitous Gateway (100) of claim 13, wherein the controller (140) is adapted for responding to the object query before the lifetime expires with an update object record on the object to the query origin.

**15.** The Ubiquitous Gateway (100) of one of the claims 2 to 14,
wherein the controller (140) is adapted for storing Ubiquitous Gateway identifications of further Ubiquitous Gateways to which the object query has been forwarded and requesting cancellation of the object query to all further Ubiquitous Gateways to which the object query was forwarded when the query object is found or the object query is cancelled.

**16.** The Ubiquitous Gateway (100) of one of the claims 2 to 15,
wherein the controller (140) is adapted for establishing a limit on how many times the object query can be forwarded.

**17.** The Ubiquitous Gateway (100) of one of the claims 1 to 16, further comprising a means for determining its own position.

**18.** The Ubiquitous Gateway (100) of claim 17, wherein the means for determining its own position comprises a GPS or Global Positioning System receiver.

**19.** The Ubiquitous Gateway (100) of one of the claims 1 to 18, further comprising a Bloom filter being prepared with object records and Ubiquitous Gateway records.

**20.** The Ubiquitous Gateway (100) of one of the claims 1 to 19,
wherein the first means for communicating (110) is adapted for communicating in a cellular mobile communication network.

**21.** The Ubiquitous Gateway (100) of claim 20, wherein the first means for communicating (110) is adapted for communicating according to one of or a combination of the group of GSM or Global System for Mobile Communications, UMTS or Universal Mobile Telecommunication System, LTE or Long Term Evolution, or FOMA or Freedom of Mobile Multimedia Access.

**22.** The Ubiquitous Gateway (100) of one of the claims 1 to 21,
wherein the second means for communicating (120) is adapted for communicating according to one of or a combination of the group of DECT or Digital Enhanced Cordless Telephone, Bluetooth, RFID or Radio Frequency Identification, ISM or Industrial, Scientific and Medical radio bands, or WLAN or Wireless Local Area Network.

**23.** The Ubiquitous Gateway (100) of one of the claims 1 to 22,
wherein the controller (140) is further adapted for receiving and installing a search query for the object, the controller (140) being further adapted to proactively search for the object as a response to the received and installed search query, or wherein the controller (140) is adapted for broadcasting the search query through the second means (120) for communicating.

**24.** The Ubiquitous Gateway (100) of one of the claims 1 to 23,
wherein the first means (110) for communicating with the mobile communication network is adapted for communicating using a communication protocol, wherein the communication protocol is such that the object can not communicate using the communication protocol.

**25.** A method performed by a Ubiquitous Gateway for communicating in a mobile communication network, the mobile communication network comprising a plurality of Ubiquitous Gateways, comprising the steps of:
communicating with the mobile communication network;
communicating with an other Ubiquitous Gateway;
communicating with an object, the object having an object identification;
detecting an object record received from the other Ubiquitous Gateway or the object;
temporarily storing the object record comprising an object record identification, the object identification and an object location;
monitoring the object;
storing the object record of the object;
repetitively receiving the object record from the other Ubiquitous Gateway;
repetitively sending the object record to the other Ubiquitous Gateway;
receiving an object query on the object from a query origin; and
reporting the object record on the object to the query origin.

**26.** Computer program having a program code for performing the method of claim 25, when the program runs on a processor.

**27.** A global query manager (160) for operating in a mobile communication network comprising a plurality of Ubiquitous Gateways, Ubiquitous Gateways being mobile and adapted for communicating in a mobile communication network and for storing an object record, comprising:
means (170) for communicating with the plurality of Ubiquitous Gateways and adapted for detecting the object record received from a Ubiquitous Gateway;
an object cache (180) for temporarily storing the object record reported by the Ubiquitous Gateway, the object record comprising an object record identification, an object identification and an object location; and
a controller (190) for receiving a record request for the object from a query origin and for forwarding the record request to the Ubiquitous Gateway,
wherein the controller (190) is adapted for accessing the object record and for selecting the Ubiquitous Gateway from the plurality of Ubiquitous Gateways based on the object record temporarily stored in the object cache (180) if available or randomly otherwise, wherein the controller (190) is adapted for receiving an other object record from the Ubiquitous Gateway, wherein the controller (190) is adapted for selecting an other Ubiquitous Gateway based on the other object record and for forwarding the record request to the other Ubiquitous Gateway.

**28.** The global query manager (160) of claim 27, wherein the controller (190) is adapted for further storing a Ubiquitous Gateway identification of the Ubiquitous Gateway which has reported the object record.

**29.** The global query manager (160) of claim 28, wherein the controller (190) is adapted for selecting the other Ubiquitous Gateway based on the Ubiquitous Gateway which has reported the object record on the object.

**30.** The global query manager (160) of one of the claims 27 to 29, wherein the controller (190) is adapted for selecting the other Ubiquitous Gateway based on the object location stored in the object cache (180) and on the other Ubiquitous Gateway location.

**31.** The global query manager (160) of one of the claims 27 to 30, wherein the object record further comprises one of or a combination of the group of a time stamp of the object last seen time, a Ubiquitous Gateway identification of a Ubiquitous Gateway having monitored the object, a period during which the object has continuously been monitored by a Ubiquitous Gateway, an estimated last seen position, whether the object is movable or not movable, a history of Ubiquitous Gateways that have exchanged the object record or a number of hops the object record has propagated.

**32.** The global query manager (160) of one of the claims 27 to 31, wherein the controller (190) is adapted for installing a search query for the object at the other Ubiquitous Gateway, the other Ubiquitous Gateway using near field communication to forward the search query to yet another Ubiquitous Gateway and for querying the object proactively.

**33.** The global query manager (160) of claim 32, wherein the controller (190) is adapted for receiving the object record based on a forwarding of the search query from the other Ubiquitous Gateway to the yet another Ubiquitous Gateway, the yet another Ubiquitous Gateway also forwarding the search query.

**34.** The global query manager (160) of one of the claims 27 to 33, wherein the controller (190) is adapted for associating a lifetime with the record request and for notifying the query origin when the lifetime of the record request has expired.

**35.** The global query manager (160) of one of the claims 27 to 34, wherein the controller (190) is adapted for forwarding the record request to the further Ubiquitous Gateways, which are likely to have newer object records on the object than the object record from the object cache (180).

**36.** The global query manager (160) of one of the claims 27 to 35, wherein the controller (190) is adapted for forwarding the record request to Ubiquitous Gateways being located in a vicinity of the object location, the vicinity being determined by the mobile communication network or from the object cache (180).

**37.** The global query manager (160) of one of the claims 27 to 36, wherein the controller (190) is adapted for forwarding the record request to a predetermined number of further Ubiquitous Gateways.

**38.** The global query manager (160) of one of the claims 32 to 37, wherein the controller (190) is adapted for installing the search query to a predetermined number of further Ubiquitous Gateways.

**39.** The global query manager (160) of one of the claims 27 to 38, wherein the controller (190) is adapted for providing a newest search object location to the query origin.

**40.** The global query manager (160) of one of the claims 27 to 39, wherein the controller (190) is adapted for receiving the record request from one of the plurality of Ubiquitous Gateways or a network node from the mobile communication network.

**41.** The global query manager (160) of one of the claims 27 to 40, wherein the means (170) for communicating is adapted for communicating using a communication protocol, wherein the communication protocol is such that the object can not communicate using the communication protocol.

**42.** A method performed by a global query manager for operating in a mobile communication network comprising a plurality of Ubiquitous Gateways, a Ubiquitous Gateway being mobile and adapted for communicating in the mobile communication network and for storing an object record, comprising the steps of:
communicating with the plurality of Ubiquitous Gateways;
detecting the object record received from a Ubiquitous Gateway;
temporarily storing the object record reported by the Ubiquitous Gateway, an object record comprising an object record identification, an object identification and an object location;
receiving a record request for the object from a query origin;
accessing the object record;
selecting the Ubiquitous Gateway from the plurality of Ubiquitous Gateways based on the object record temporarily stored if available or randomly otherwise;
forwarding the record request to the Ubiquitous Gateway,
receiving an other object record from the Ubiquitous Gateway;
selecting an other Ubiquitous Gateway based on the other object record; and
forwarding the record request to the other Ubiquitous Gateway.

**43.** Computer program having a program for performing the method of claim 42, when the computer program runs on a processor.

**44.** System comprising a Ubiquitous Gateway (100) according to one of the claims 1 to 24 and a Global Query Manager (160) according to one of the claims 27 to 41.
